# EUROPEAN PATENT SPECIFICATION

(11) **EP 4 003 752 B1**
(45) Date of publication and mention of the grant of the patent: **09.04.2025**
(21) Application number: 20775277.5
(22) Date of filing: 18.09.2020
(51) Int. Cl.: B60B 5/02

(54) **METHOD OF ASSEMBLING A BICYCLE RIM, BICYCLE RIM**
VERFAHREN ZUM ZUSAMMENBAUEN EINER FAHRRADFELGE
PROCÉDÉ D'ASSEMBLAGE D'UNE JANTE DE VÉLO

(30) Priority: 19.09.2019 GB 201913552
(43) Date of publication of application: 01.06.2022
(73) Proprietor: Adultimum AG, 9200 Gossau (CH)
(72) Inventor: HÜSLER, Daniel, 9012 St. Gallen (CH)
(74) Representative: Manitz Finsterwald Patent- und Rechtsanwaltspartnerschaft mbB
(86) International application number: PCT/EP2020/076106
(87) International publication number: WO 2021/053142

(56) References cited:
- WO-A1-2019/113701
- CN-A- 101 269 611
- US-A1- 2008 265 657
- US-A1- 2010 090 518
- US-A1- 2016 243 893
- BAZLE Z., CONFERENCE: 33RD INTERNATIONAL SAMPE TECHNICAL CONFERENCE, 8 November 2001 (2001-11-08), XP002800663, Retrieved from the Internet <URL:https://www.researchgate.net/publication/297760361_IMPROVEMENT_OF_DIMENSIONAL_TOLERANCES_DURING_VARTM_PROCESSING> [retrieved on 20201012]

## Description

The present invention relates to a method of assembling a bicycle rim, in particular a bicycle rim of composite material. The invention further relates to a bicycle rim obtained by such a method.

Performance bicycle rims need to be light weight, have an inherent stiffness, be durable and well balanced so that these can be used on the road, on race tracks and in off-road applications.

Composite bicycle rims are well known as light weight rims. Unfortunately, the method of manufacture of such rims leads to deficient inter-laminar shear strengths, non-ideal wall thickness leading to rims having less than the desired stiffness and strength and also rims that are comparatively unbalanced.

It should also be noted that such bicycle rims are manufactured by hand in a very time-consuming manner. Typically, it takes between 7 to 8 hours to produce one rim per hand.

Conventionally known bicycle rims as well as production methods thereof are known from WO 2019/113701 A1, US 2016/243893 A1 and US 2010/090518 A1.

For this reason, it is an object of the invention to provide an improved method and bicycle rim in which the durability and stiffness of the bicycle rim is increased and the degree of unbalance is reliably reduced. It is yet a further object of the invention to reduce the time of manufacture of such bicycle rims and to provide an at least semi-automated method of manufacture of such bicycle rims.

This object is satisfied by a method having the features of claim 1.

Such a method of assembling a bicycle rim comprises the steps of:
providing one or more patterns of removable material, said one or more patterns together having an outer shape resembling, i.e. corresponding to, an inner shape of at least part of said rim;
covering at least some of the outer sides of said one or more patterns of removable material with one or more layers of webs of fiber material; said one or more layers of webs of material forming said rim;
placing said covered one or more patterns of removable material into a mold, said mold having an internal cavity the internal cavity corresponding to an outer shape of said rim;
heating said mold to a first temperature in a first temperature range.

Said rim according to the invention further has first and second internal spaces that are formed by respective first and second patterns, with the first pattern being formed in one piece and forming said first internal space and being covered with said one or more layers of webs of fiber material and sequentially assembling said second pattern from respective second pattern segments at said covered first pattern from two, three, four, five or more second pattern segments to form said second pattern covered with one or more further layers of webs of fiber material. In this way a high-performance rim having the desired characteristics can be formed.

Additionally, said combined first and second patterns are covered with one or more layers of webs of fiber material. In this way one can ensure a thorough connection between the covered first and second patterns to form a high strength rim having the desired stiffness and inter-laminar shear strength.

By using a removable mold in the form of a pattern of removable material the layers forming the bicycle rim can be ideally pressed together during the formation of the rim, so that rims can be formed with a pre-definable uniform thickness of the sidewalls of the rim. Moreover, through the use of two molds pressing the material of the rim between one another a bond between the layers of webs of fiber material can be enhanced leading to more durable and stable rims. A further benefit obtained by such a method is that the internal surface of internal spaces of the rim can be formed with a reduced desired surface roughness, this leads to a more homogenous rim, to a rim having the desired stiffness and to a rim having an improved inter-laminar shear strength.

Using composite materials, a lightweight rim can be formed for high-performance applications, said rim having the desired characteristics. By way of the method described herein the time of manufacture of the rim can typically be reduced from 7 hours to 7 to 25 minutes depending on the type of resin used to form the composite material and its time of curing. This decrease in time of manufacture is complemented by an increase in the quality of the rim obtained using the presently described method.

It should also be noted that the first temperature range is preferably a temperature range of ± 3° centered about the desired first temperature. The first temperature is preferably selected between 30 and 60°C, especially between 40 and 55°C.

In this connection it should be noted that the webs of fiber material may a layer of fabric made from woven fibers that are made by interlacing two or more tows of fibers at right angles to one another. Additionally or alternatively the web of fiber material may be formed by a tow of fibers. In this connection a tow of fibers is a bunch of fibers like a yarn.

The first temperature may be used for at least one of heating the mold to aid introduction of resin into the mold, heating said mold for curing the material of said rim, and removal of the removable material of the pattern, such as a wax.

In this connection it should be noted that the one or more patterns may be used as part of a mold for a so-called resin transfer molding (RTM) process. In this case, the pattern, i.e. wax mold, may then be covered with roving following which it may be inserted into a further mold for the addition of resin and heat treatment to form the final device of composite material in a manner known per se.

At least one of the one or more patterns may be formed by three, four, five or more pattern segments that are assembled to form the at least one of the one or more patterns. Forming said one or more patterns from a plurality of pattern segments makes the assembly of larger patterns with complex geometries simpler.

Said pattern segments may be covered with one or more layers of webs of fiber material before or after the pattern segments are combined to form said pattern.

At least one of the one or more patterns may comprise one or more first inserts integrally formed therein. The provision of inserts in the pattern means that the patterns can be held in further apparatus and be provided with features providing stability in shape to said patterns of removable material.

At least one of said first inserts may be configured to interact with a support apparatus used to assemble the rim. In this way the pattern can be beneficially held during at least some of the stages of an RTM process.

In this connection it should be noted that at least one of said one or more patterns may be supported at a respective support apparatus. In this way the patterns can all be beneficially held during at least some of the stages of the RTM process.

Said first pattern may further be formed by three, four, five or more pattern segments that are assembled to form the respective pattern of the internal space prior to covering the respective one of the first and second patterns forming the internal space with said one or more layers of webs of fiber material. The use of pattern segments enables the production of complex 3D parts in an expedient and efficient manner.

Said first pattern may also be formed from two, three, four, five or more first pattern segments to form said first pattern. In this way smaller molds for the manufacture of the respective first and second patterns can be used which can simplify the manufacture of the first and second patterns.

The method of assembling the rim may further comprise the step of heating said mold to a second temperature in a second temperature range. It should also be noted that the second temperature range is preferably a temperature range of ± 3° centered about the desired second temperature. The second temperature is preferably selected between 60 and 100°C, preferably between 70 and 95°C.

The second temperature may be used for at least one of heating the mold to heat said mold for curing the material of said rim, and removing said removable material, e.g. melting away said wax.

The method of assembling the rim may further comprise the step of heating said mold to a third temperature in a third temperature range. The third temperature can generally be selected to remove the removable material, e.g. a wax, i.e. to remove said one or more patterns of removable material from said mold. It should also be noted that the third temperature range is preferably a temperature range of ± 3° centered about the desired third temperature. The third temperature is preferably selected between 80 and 140°C, preferably between 95 and 120°C.

The reason for these first, second and/or third temperature ranges existing is that the molds may have a temperature gradient across a length and width of the mold which leads to a higher temperature of the mold at one side of the mold in comparison to the temperature at a further side of the mold.

Said first temperature may be lower than said second temperature. Moreover, said second temperature may be lower than said third temperature. In order to produce the rims a resin used to bond the different one or more layers of webs of fiber material one to another may be subjected to temperature and pressure to ensure that the resin flows into all of the spaces between fibers and bonds these one to another. This flow of the resin can be aided if the temperature of the mold is elevated in comparison to room temperature at standard pressures due to a more runny consistency of the resin. The runnier the consistency of the resin is, reduces the number of air pockets obtained in the rim leading to an increased durability and stiffness of said rim due to the decrease in the number of air pockets.

Following the flow of the resin throughout the mold, the resin is cured in order to obtain the rim, this curing can take place either on the application of the second temperature and/or via the application of UV light. Once the material of the rim has cured and the rim will maintain its final shape, the removable material can be removed from the internal spaces of said rim.

The removal may take place by heating the removable material, e.g. a wax, or a special compound that can be liquified on the application of one or more further chemical substances can be used as the removable material.

A vacuum may be applied to said mold during and/or prior to heating said mold to said first temperature, optionally during and/or prior to heating said mold to said second and third temperatures. The application of a vacuum possibly on heating can assist in the flow of a resin in and around one or more layers of fiber material to ensure that as few as possible air pockets result in the rim. It has namely been found that the presence of too many air pockets can significantly reduce the inter laminar shear strength of the rim. Hence a rim having an as high as possible inter-laminar shear strength is obtainable by such a method which reduces the amount of air pockets present during the manufacture of said rim in and around said layers of webs of fiber material.

Said vacuum may be selected with a pressure in the range of 0.8 to 10⁻⁴ bar. Such vacuums are readily obtainable using a roughing pump either on its own or connected in series with a turbomolecular pump. Moreover, such pressure can achieve the desired flow of the resin through and around the layers of webs of fiber material while reducing the number of air-pockets remaining in a rim.

The method of assembling the rim may further comprise the step of introducing a resin into said mold prior to and/or during said step of heating of said mold to said first temperature.

Through the provision of resin from the outside, a web of fiber material which previously is not coated with a resin, i.e. a prepreg, can be used. Thereby the assembly in a mold can be simplified and an average wall thickness of the final rim can be controlled in an improved manner.

Said resin may be heated to below a curing temperature of said resin on the introduction of said resin into said mold. In this way one does not risk the resin curing prior to removing all of any possibly present air gaps.

Said step of the application of heat may comprise heating said mold to said second temperature and/or heating said resin on introduction into said mold to said second temperature in said second temperature range. In this way one can ensure that the material of the rim can cure at the ideal temperature to make it possible to obtain the desired strength and stiffness of the rim in the shortest possible period of time to expedite the manufacture of the rim.

Said resin may be one of a one-component resin, a two-component resin comprising a hardener, and a multi-component resin comprising one or more hardeners.

The resin may comprise a resin on an epoxy basis, a resin on a polyurethane basis, a resin on a cyanate ester basis or another basis suitable for injection or infusion.

Said one or more patterns may comprise at least one of one or more recesses and projections in an outer surface thereof. Such projections can be used to form e.g. apertures or predefined channels at the rim. The recess can be used to form portions having an increased amount of material to increase a stiffness of a portion of the rim, such as for the formation of ribs e.g. in a sidewall of the rim, to strengthen the radial components of the rim. The projections can be arranged at positions of the rim where spokes and/or the valve are arranged. The spokes and thus the projections are generally arranged symmetrically along the circumference of the rim.

Additionally or alternatively the positions at which spokes and a valve are placed at said rim can be reinforced with elevated portions by providing corresponding recesses in the pattern.

Said one or more patterns of removable material may be made of wax. Wax is a comparatively cheap material that can be used in the bulk manufacture of wax patterns in a reliable manner.

Said one or more patterns of removable material are produced in a 3D printing process, an injection molding process and a wax casting process. These are beneficial ways of producing patterns of removable material.

Said wax casting process may comprise the steps of:
providing a wax mold having an inner space having a shape corresponding to an outer shape of said pattern;
introducing said removable material into said wax mold in liquid form; wherein said step of introducing said removable material into said wax mold comprises filling between 40 and 99% of said wax mold with liquid removable material;
introducing gas into said liquid removable material present in said wax mold and pressurizing said mold with a pressure difference between an outside of said formed wax pattern and a hollow space within said wax pattern selected in the range of 0.02 to 20 bar;
moving said wax mold to completely coat an inner surface of said wax mold with said liquid removable material; and
solidifying the removable material in said wax mold.

In this way wax patterns can be formed which are generally free off shrinkage effects at an outer surface of the pattern ensuring the manufacture of a rim having the desired wall thickness and wall thickness tolerance.

Said one or more patterns of removable material may have a melting point selected in the temperature range of 80 to 140°C, preferably in the range of 95 to 120°C. Said one or more patterns of removable material remain stable in shape to temperatures selected in the range of 60 to 100°C, preferably in the range of 70 to 95°C. Said one or more patterns of removable material may thus remain stable in shape at temperatures below a melting point of said removable material. This is particularly beneficial to ensure the manufacture of rims having the desired uniform wall thickness.

Said one or more patterns of removable material may remain stable in shape at temperatures below a melting point of said removable material. This means that an outer surface of the one or more patterns does not readily alter its physical state. In this way the one or more patterns can form a part of a mold used in a Resin Transfer Molding Process (RTM process) or a Vacuum Assisted Resin Transfer processes (VARTM process) with which the rim may be formed.

The one or more patterns of removable material that are stable in shape can thus be used to form inner surfaces of enclosed spaces of the rim, with the inner surfaces of the enclosed spaces of the rim having a pre-definable shape and contour.

One or more of the patterns of removable material may be formed by first pattern segments and/or second pattern segments that remain stable in shape at temperatures below a melting point of said removable material. In this way the assembled pattern segments can form patterns that form molds for the one or more internal spaces of the rim.

Said first pattern may be formed by first pattern segments, in particular only formed by first pattern segments and/or wherein said second pattern may be formed by second pattern segments, in particular only formed by second pattern segments.

Said first pattern segments and/or said second pattern segments may be bonded one to another using a pattern material comprising, in particular consisting of said removable material. Using a material comprising said removable material as a bonding agent means that the bonding agent will likewise be removed on removing said pattern. Alternatively the pattern segments can be welded one to another, for example by hot plate welding.

Said first pattern segments and/or said second pattern segments are bonded one to another at respective first and second ends using said pattern material comprising, in particular consisting of said removable material.

First and second ends of said first pattern segments and/or of said second pattern segments may be formed complementary to one another. In this way the first and second ends of respective first and second pattern segments can be bonded one to another in a simple way as these are matching in shape or the like. For this purpose the ends may be chamfered, have features complementary and/or matching in shape and/or the like.

It is particularly preferable to use pattern segments having shapes complementary to one another to assemble the patterns and then to bond these one to another, e.g. by means of a welding technique.

Said first and second pattern segments may have a generally arc-shaped outer shaped viewed in a cross-section thereof. In this way the segments replicate parts forming internal molds for forming the rim, which when assembled form a complete pattern respectively a mold for said rim.

Said one or more patterns have an outer surface, with an average surface roughness Ra below 200 µm, in particular below 150 µm and especially below 100 µm. By providing an internal mold for said rim having such a surface roughness, rims with pre-definable wall thicknesses can be formed.

Two patterns of removable material may be provided, with each pattern of removable material having an outer shape forming a mold for an inner shape of a respective cavity of said rim, with said removable material remaining stable in shape at temperatures below a melting point of said removable material at standard temperatures and pressures, and wherein the same removable material may be used for each of the two patterns of removable material. In this way a mold for a rim may be provided that can be covered with the fiber material prior to insertion into the mold where the rim is subsequently formed.

Said one or more patterns may each have one or more second inserts present therein, with said second inserts being fixedly attached to said rim. The position of the second inserts can correspond to positions in which recesses are present in the pattern to reinforce the portions of the rim where the second inserts are present. The second inserts can also be used to aid in coupling the rim to the further components of a bicycle wheel, such as spokes or a valve of the wheel.

Said second inserts may be provided at positions for spokes of said rim and/or at a position of a valve associated with a wheel formed by said rim. It has hitherto been found that during the production of composite rims, the drilling of the holes for the spokes can lead to a splintering of the material of said rim at the position where it is bored leading to inherent weaknesses in said rim.

In this connection it should be noted that said second inserts may be directly or indirectly attached to said first inserts. In this way the position of the spokes of the bicycle rim can be aligned from the start during the method of assembling the bicycle rim such that a rim with a superior weight distribution can be achieved.

In this connection it should be noted that tows of fibers may be applied at the positions of the inserts to reinforce the position of the inserts in said completed rim, whereas woven fabric can be introduced on areas representing a planar surface of the rim.

Said one or more layers of fiber material are formed by carbon fibers, glass fibers, basalt fibers, wood fibers, hemp fibers, aramid fibers, and polyester fibers, respectively in dry condition or as a prepreg. Such fibers can beneficially be used in the formation of a rim of composite material that is reinforced with fibers. In this connection it should be noted that a prepreg is a layer of fibers which comprise an adhesive.

According to a further aspect the present invention relates to a rim obtained by a method in accordance with the teaching present herein, said rim being formed of composite material, said rim having one or more internal spaces formed by walls, with a wall thickness of said walls of said rim having a predefinable wall thickness with a tolerance of the wall thickness lying in the range of ± 0.5 mm, in particular of ± 0.1 mm, especially of ± 0.05 mm, for a wall thickness selected in the range of 1 to 4 mm, in particular for a length of material of said rim cut from said rim in the range of 1 to 5 mm and at a width selected in the range of 0.5 to 2.5 cm.

Said rim has a tolerance of the wall thickness lying in the range of ± 0.3 mm, especially of ±0.2 mm, for a wall thickness selected in the range of 1 to 4 mm.

Said rim may have a void content of less than 2%, in particular of less than 1.5%. A rim having such a void content has a particularly good inter laminar shear strength. Such shear strengths are ideal for high-performance bicycle rims having the desired durability and stiffness.

In this connection it should be noted that a void is a pore present in a composite material that remains unfilled with polymer and fibers. If less than ideal manufacturing standards are used then voids result which cause a degradation of the mechanical properties and lifespan of the composite material. The void content is represented as a ratio where the volume of voids, solid material and bulk volume are taken into account.

Said rim may have a tolerance of the surface profile of ± 0.1 mm, in particular for a length of material cut from said rim selected in the range of 1 to 5 cm and a width selected in the range of 0.5 to 2.5 cm. In this way a rim having particularly smooth surfaces can be achieved by means of the present teaching.

In this connection it should be noted that the tolerance of the surface profile is a standard measurement technique used to define the surface quality of objects. The more uniform the surface is, the lower its tolerance is. The surface profile is defined by a uniform boundary around a surface within which the elements of the surface must lie. The surface profile is a complex tolerance that simultaneously controls a feature's form, size, orientation, and sometimes location. The surface profile is a three-dimensional tolerance that applies in all directions regardless of the drawing view where the tolerance is specified. It is usually used on parts with complex outer shape and a constant cross-section like extrusions.

To measure the tolerance of a surface profile two planes are placed around the surface whose tolerance profile is to be measured and the tolerance is defined by the spacing between the planes that are placed around the surface.

Said rim may have a tolerance of the surface profile of ± 0.05 mm, in particular of ± 0.03 mm, especially of ± 0.01 mm e.g. at the position of e.g. an insert for a spoke or the like.

Said rim may comprise reinforcing ribs, reinforcing beads, stiffening corrugations and/or reinforcing platforms, i.e. elevated portions, formed at at least an inner surface of a sidewall portion of said rim. Such formations in an otherwise uniform surface add strength to the rim and hence improve the durability and strength of a rim comprising such formations.

Said rim may comprise inserts present at positions of said rim corresponding to positions of spokes and/or of a valve associated with a wheel formed by said rim.

Said rim may comprise apertures inherently present in at least one wall of the rim. By providing a rim having such apertures, weak spots of prior rims can be avoided.

Further embodiments of the invention are described in the following description of the Figures. The invention will be explained in the following in detail by means of embodiments and with reference to the drawing in which is shown:
- Fig. 1: a side view on a bicycle wheel having a rim connected to an axle via spokes;
- Fig. 2: a side view of the rim of Fig. 1;
- Fig. 3: a sectional view along the sectional line A:A of the rim of Fig. 2;
- Fig. 4: a sectional view similar to that of Fig. 3, with the rim comprising reinforcing ribs and an elevated portion;
- Fig. 5: a sectional view similar to that of Fig. 3, with the rim comprising an aperture and an insert;
- Fig. 6: a sectional view similar to that of Fig. 3 through a mold in which internal spaces of said rim are filed with removable material prior to the final forming of said rim;
- Fig. 7: a sectional view through a mold for forming a second pattern of removable material of said rim;
- Fig. 8: a sectional view through a further mold for forming a first pattern of removable material of said rim;
- Fig. 9: a sectional view through a mold comprising mold segments for first and second patterns of removable material;
- Fig. 10: a side view of an assembly of first pattern segments at a support apparatus;
- Fig. 11: a side view of an assembly of second pattern segments at a first pattern covered with one or more layers of webs of fibers;
- Fig. 12: a sectional view through a mold for the first patterns similar to that of Fig. 8, with projections being present in said mold;
- Fig. 13: a sectional view along the sectional line B:B of the rim of Fig. 2 of the second pattern at a position where spokes are introduced into said rim via projections and recesses of said first pattern; and
- Fig. 14: a sectional view similar to that of Fig. 3 formed using a first pattern according to Fig. 13 with the rim comprising apertures integrally formed during the manufacture of said rim;
- Fig. 15: a sectional view through a mold for forming a first pattern of removable material of said rim similar to that shown in Fig. 7;
- Fig. 16: a top sectional view of the mold of Fig. 15;
- Fig. 17: a view similar to that of Fig. 16 for a different type of first pattern;
- Fig. 18: a view of the first pattern of Fig. 17 at a support apparatus;
- Fig. 19: a sectional view of the first and second patterns similar to Fig. 6 prior to the application of a third layer of roving;
- Fig. 20: a schematic sectional view of the assembly of second pattern segments at the first pattern covered with roving;
- Fig. 21: a schematic sectional view of the first and second patterns of Fig. 19 in a mold with the rim having been formed in a resin transfer molding process; and
- Fig. 22: a schematic sectional view similar to Fig. 21 with further inserts incorporated in the first and second patterns.

In the following the same reference numerals will be used for parts having the same or equivalent function. Any statements made having regard to the direction of a component are made relative to the position shown in the drawing and can naturally vary in the actual position of application.

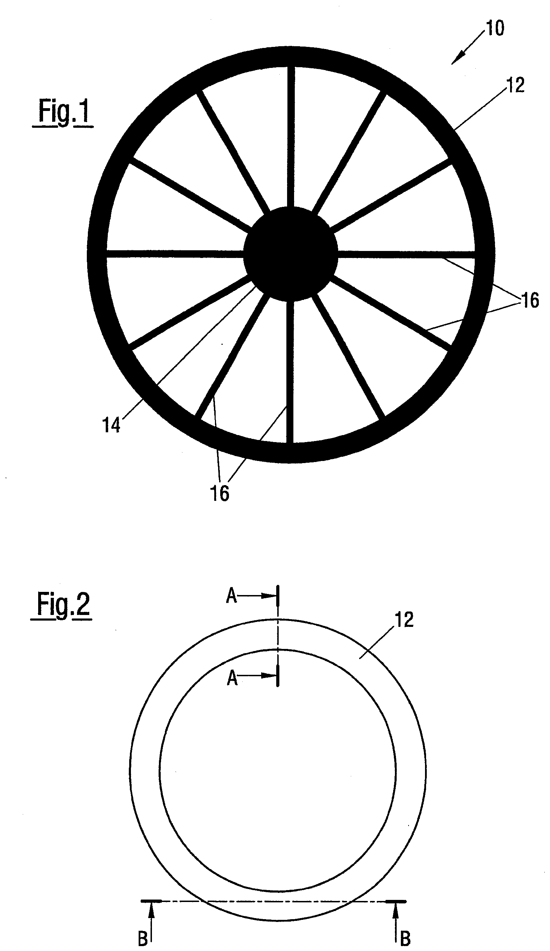

Fig. 1 shows a side view of a wheel 10 in the form of a bicycle wheel. The wheel 10 comprises a rim 12 connected to a hub and axle assembly 14 via spokes 16. The wheel 10 can be connected to e.g. a bicycle (not shown) via the hub and axle assembly 14 in a known manner. The axle of the hub and axle assembly 14 is thereby fixed relative to the bicycle, whereas the hub of the hub and axle assembly 14 can rotate about the axle of the hub and axle assembly 14.

The spokes 16 are provided in order to carry the weight of the bicycle as well as its load, e.g. the rider, via the rim 12. The spokes 16 and rim 12 also absorb any irregularities that may be present on the road or track and thereby aid in ensuring the comfort of the rider. Furthermore, the spokes 16 and the rim 12 transmit the acceleration and breaking effort of the rider between the road and the hub and axle assembly 14 and vice versa. Thus, the rim 16 has to be able to cope with the forces transmitted via the spokes 16 and in the wheel 10 in order to ensure an as efficient as possible ride and comfort using said rim 12.

Fig. 2 shows a side view of the rim 12 of Fig. 1. The rim can be a standard sized rim such as a 26", 27", 28", 29" or a 30" rim. It could also be one of a 14" to 24" rim, typically used in children bicycles or BMXs.

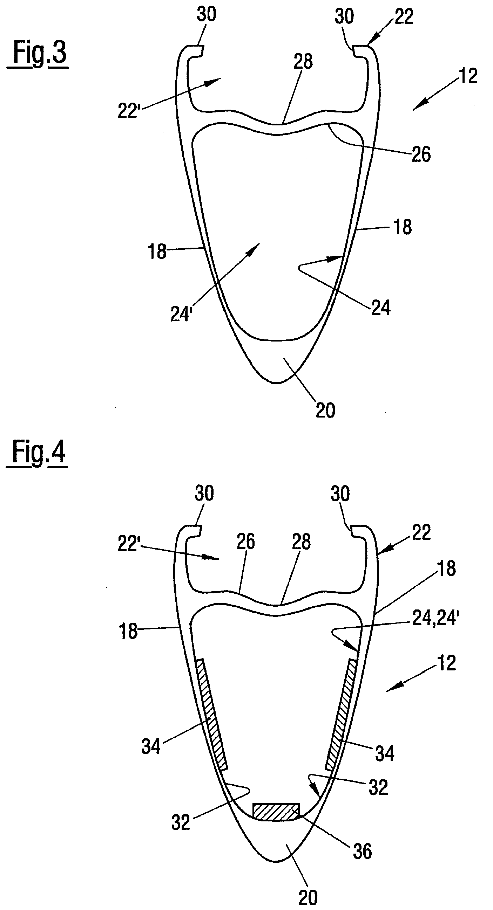

Fig. 3 shows a sectional view along the sectional line A:A of the rim 12 of Fig. 2. The rim 12 comprises two sidewalls 18 connected at a bottom end 20, with the two-sidewalls 18 forming part of a tire receiving section 22 at an end of said sidewalls 18 lying radially outward of the bottom end 20, and a hollow section 24 directly adjacent to the tire receiving section 22. The tire receiving section 22 and the hollow section 24 respectively defining internal spaces 22', 24' of said rim 12.

The tire receiving section 22 is separated from the hollow section 24 via a separating wall 26. The separating wall 26 comprises a channel 28 which is configured to accommodate part of an inner tube (not shown) of the wheel 10.

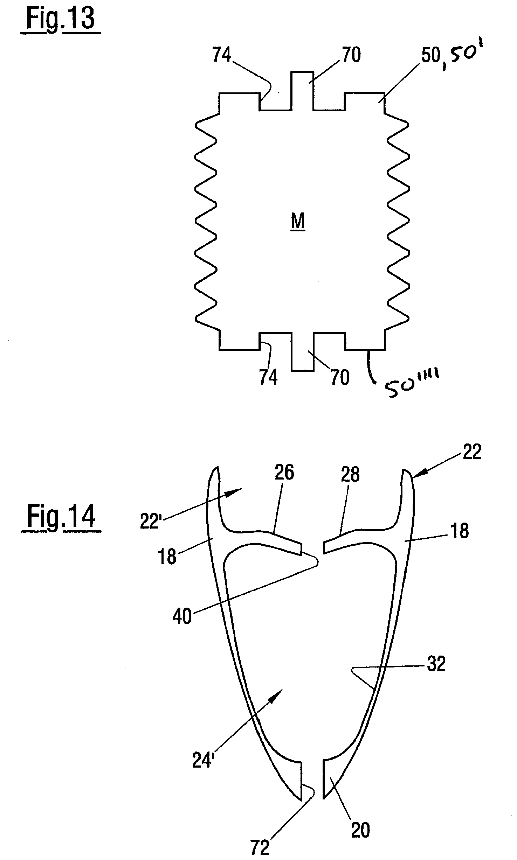

An end of the sidewalls 18 remote from the bottom end 20 comprises projections 30 that can be present in order to increase a clamping force on a tire that can be installed in the tire receiving section 22. As indicated in Fig. 14 such projections are not required at the rim 12.

Fig. 4 shows a sectional view similar to that of Fig. 3, with the rim 12 comprising reinforcing ribs 34 and an elevated portion 36. The elevated portion forming a reinforcing platform at the bottom end 20 of said rim 12, such that the spokes 16 can be stably connected to the rim 12 at the position of the elevated portion 36. The reinforcing ribs 34 are present at an inner surface 32 of the rim 12.

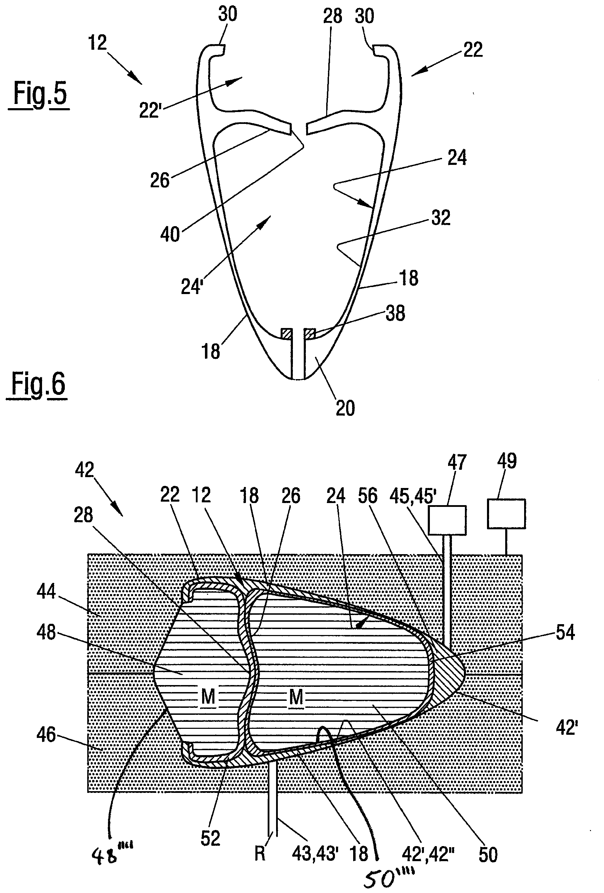

Fig. 5 shows a sectional view similar to that of Fig. 3. The rim 12 comprises inserts 38 present at positions of said rim 12 corresponding to positions of the spokes 16. These inserts can be metal inserts 38 or the like that can be embedded into the rim 12 during the manufacture of the rim 12.

Also visible is an aperture 40 via which the spokes can be engaged using a tool in order to balance a wheel 10 by tightening or loosening a spoke 16 as required.

In this connection it should be noted that the apertures 40 could also be formed by inserts 38 present in the patterns 48, 50 of removable material M at positions which later form the apertures or the position of the spokes in order to fixedly and inherently attach said inserts 38 during the manufacture and assembly of said rim.

In this connection it should be noted that inserts 38 and apertures 40 may also be present at a position of the rim 12 where a valve associated with the wheel 10 is inserted into the rim 12.

In this connection it should further be noted that the provision of ribs 34 and/or elevated portions 36 and/or inserts 38 and/or apertures 40 within the internal spaces 22', 24' of the rim 12 has hitherto not been possible using prior art techniques of forming rims of composite materials. This is because the prior art methods had no control over the formation of the inner space 22', 24' of said rims 12 therefore not making it possible to foresee such structures in the rims 12.

The rim 12 as will be explained in the following is formed by the composite material. A wall thickness of the walls 18, 26 of said rim 12 have a pre-definable wall thickness with a tolerance of the wall thickness lying in the range of ± 0.5 mm for a wall thickness selected in the range of 1 to 4 mm.

In order to test the tolerance of the wall thickness a strip of material of a part of the rim 12 is cut from the rim, for example a strip having a length of 1 cm and a width of 0.5 cm, or a strip having a length of 5 cm and a width of 2.5 cm and a variation of the thickness of each strip is measured at 0.1 cm intervals along both the length and the width of the strip of material using e.g. a pair of Vernier calipers or the like. The measured thicknesses are then added and divided by the amount of measurements to obtain an average thickness. This average thickness is then compared to the pre-defined thickness of said part of said rim 12.

Indeed for very high-performance rims 12 manufactured using the method described herein, the rims 12 may have a tolerance of the wall thickness lying in the range of ± 0.3 mm, especially of ±0.2 mm, for a wall thickness selected in the range of 1 to 4 mm.

The rim 12 may have an increased inter laminar shear strength due to a comparatively low void content of less than 2%.

Fig. 6 shows a sectional view similar to that of Fig. 3 of a mold 42 in which internal spaces 22', 24' of said rim 12 are filed with a pattern 48, 50 of removable material M. The mold 42 comprises an internal cavity 42' into which the patterns 48, 50, and the layers of webs of fiber material 52, 54, 56 are placed on assembly of the rim. On assembly of the rim, the top and bottom halves 44, 46 of the mold 42 are closed. In order to form the composite material of the rim 12, resin R is introduced into the mold 42 via a resin port 43 and a corresponding passage 43' from a non-shown reservoir.

Thus, the patterns of removable material M can be used as a mold in resin transfer molding (RTM) processes to form composite bicycle rims.

The removeable material M forming the first pattern 50 is covered completely with layer of webs of fiber material 54. Three sides of the second pattern 48 formed by removable material M are covered with layers of webs of fiber material 52. Once the covered second pattern 48 is brought into contact with the covered first pattern 50, a third layer of webs of fiber material 56 cover both parts of both the first and second patterns 50, 48. Said one or more layers of fiber material 52, 54, 56 can be formed from carbon fibers, glass fibers, wood fibers, hemp fibers, aramid fibers, polyester fibers, a prepreg.

In this connection it should be noted that it is preferred to use pure fibers that are not in prepreg form, as such fibers are still comparatively flexible and have not reached the final thickness obtained on the addition of the resin R. In this way the covered patterns 48, 50 can be placed into the mold 42 in a simpler manner. Leading to a reduction in the time required to assemble the rim 12. Moreover, layers of webs of fiber material 52, 54, 56 to which a resin R is added can be produced having a superior inter-laminar shear force in comparison to layers of pre-pregs.

In order to aid the flow of resin R into a space filled with the layer of webs of fiber material 52, 54, 56 formed between an inner surface 42" of the mold 42 and an outer surface 48ʺʺ of the pattern 48, respectively of an outer surface 50ʺʺ of the pattern 50, a vacuum and/or heat can be applied. This leads to a more runny consistency of the resin R so that the resin R can be distributed better in the mold 42. Such a runny resin R can be used to reduce the amount of air pockets in said rim 12. Further air pockets can be extracted using said vacuum. The vacuum can be set to a pressure in the range of 0.8 to 10⁻⁶ bar.

The vacuum can be applied by sucking air from the internal cavity 42' using a vacuum pump 47. The vacuum pump 47 is connected to the internal cavity 42' via a vacuum port 45 and a channel 45'.

The heat can be applied via a heating and/or cooling device 49. This can be configured to heat and/or cool the mold 42 directly and/or the reservoir of the resin R in order to heat the resin R to a first temperature in a first temperature range.

In this connection it should be noted that the resin R can be cured through the application of heat and/or UV light.

If the resin R is cured through the application of heat the mold 42 is heated further to a second temperature in a second temperature range via the heating and/or cooling device 49. In this connection it should be noted that the mold 42 and/or the resin R is/are heated to a temperature below a curing temperature of said resin R on the introduction of said resin R into said mold 42 to ensure that the rim 12 does not prematurely cure during the introduction of the resin R into the mold 42.

Once the material of the rim 12 has cured the removable material M, which is typically a wax, but can also be other kinds of materials, is removed through the application of heat. For this purpose the mold 42 is heated further to a third temperature in a third temperature range.

Thus, said first temperature is lower than said second temperature and the second temperature is lower than said third temperature.

In this connection it should be noted that when the mold is heated to one of the first, second and third temperatures, the heating steps may be carried out gradually in a stepwise manner. For example, the temperature can be increased in steps of 0.5, 1, 1.5, 2, 2.5 or 3° C over a period of 10s, 20s, 30s, etc., such that the material present in the mold can gradually adapt to the temperature of the mold.

Particularly during RTM processes, it should be noted that the composite of fiber and resin is typically heated in steps to below the glass transition temperature of the resin in order to prevent the device to be formed from becoming soft and thereby obtaining a device with a deformed outer and/or inner surface.

In this connection it should be noted that the mold used in the RTM process and the wax mold may each preferably be formed from a thermally conductive and non-magnetic material, such as aluminum or an aluminum alloy.

The resin R is one of a one-component resin, a two-component resin comprising a hardener, and a multi-component resin comprising one or several hardener.. Moreover, the resin can comprise a resin on an epoxy basis, a resin on a polyurethane basis, a resin R on a cyanate ester basis or another basis suitable for injection or infusion. Such resin can be beneficially used in the formation of composite devices.

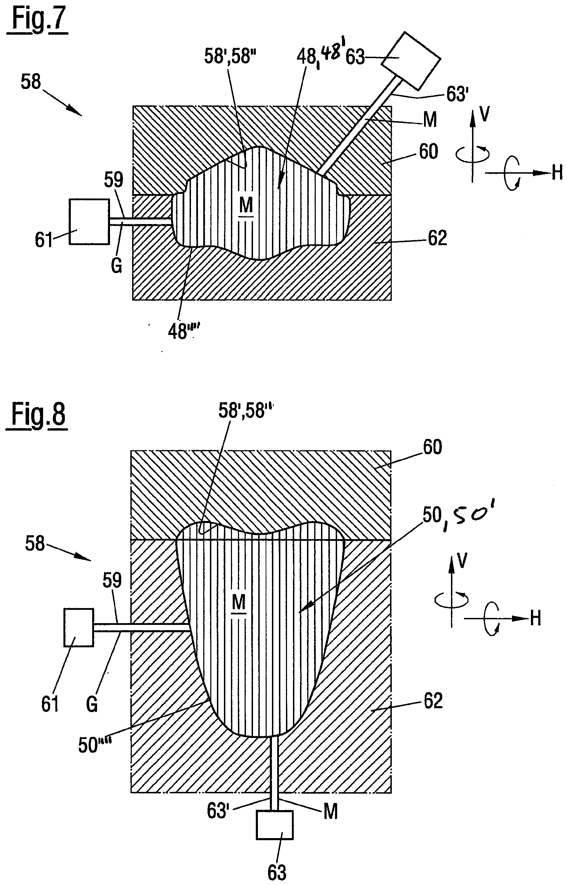

Said one or more patterns 48, 50 of removable material M can be produced in a 3D printing process, an injection molding process and a wax casting process. By way of example a wax casting process will now be described in connection with Figs. 7 to 9.

Figs. 7 and 8 show respective sectional views through wax molds 58 having inner spaces 58' for forming the first and second patterns 50, 48 of removable material M of said rim 12.

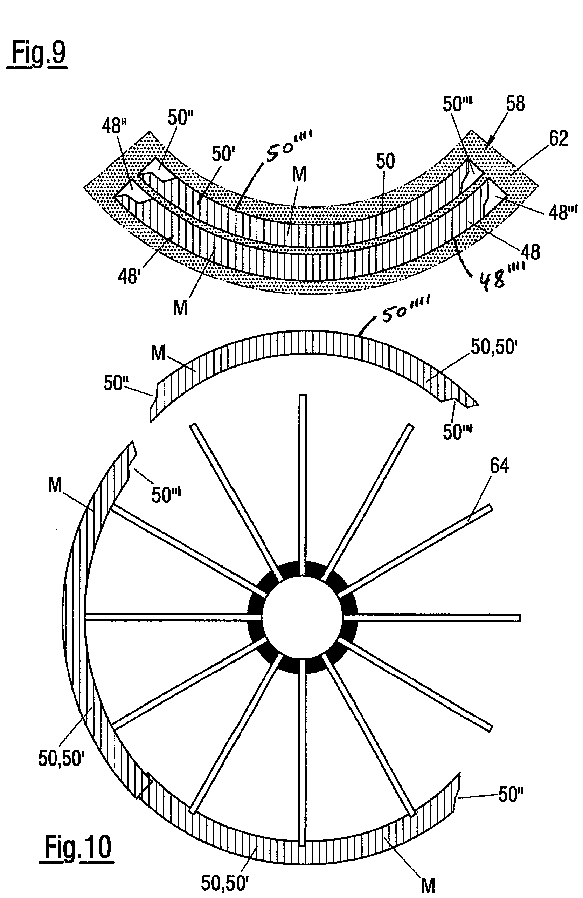

Fig. 9 shows a sectional view through the mold 58 comprising mold segments with inner spaces 58' for first and second pattern segments 50', 48' of removable material R. It has namely been found that due to the complex shape of the rim 12 as it is shown e.g. in Figs. 3 to 5 with the separating wall 26 having the channel 28 projecting into the inner cavity 24' of the hollow section 24, it is necessary to assemble at least the second pattern 48 of removable material 48' from individual segments. Moreover, this assembly from segments has also been found to make the wax mold 58 in which the wax patterns 48, 50 can be made simpler. It should be noted that for simpler rims 12 having only one cavity it may not be necessary to form patterns 48, 50 from pattern segments 48', 50' but that only one pattern 48 is required which can be formed in one piece.

Each internal space 22', 24' is formed by the first and second patterns 50, 48, with each first and second pattern 50, 48 being formed by three, four, five or more pattern segments 50', 48' that are assembled to form the pattern 48, 50 of the respective internal space 22', 24'. For this purpose, first and second ends 48", 48"', 50", 50‴ of the pattern segments 48', 50', comprise complementary shaped tongue and groove like features as indicated in Fig. 9. Also other shapes complementary in shape can be provided at the respective ends 48", 50" of the pattern segments 48', 50'. The complementary shaped first and second ends 48", 48‴, 50", 50‴ enable the combining of the individual segments to a wheel shaped pattern 48, 50.

An inner surface 58" of the respective molds 58 is shaped such that it has the inner shape of the respective rim 12 to be formed by the pattern 48, 50 or pattern segments 48', 50' formed in the respective wax mold 58, i.e. the wax mold 58 has an inner space 58' having a shape corresponding to an outer shape of said pattern 48, 50 or pattern segments 48', 50'.

The wax, i.e. the removable material M, is introduced into said inner space 58' of the mold 58 in liquid form from a reservoir 63 via a supply line 63'. Between 40 and 98% of said inner space 58' of the wax mold 58 is filled with liquid removable material M.

Following this a gas G is introduced into said liquid removable material M present in said wax mold 58 to pressurize said removable material M present in said wax mold 58. The wax M is pressurized with a pressure difference between an outside of said formed wax pattern 48, 50 and a hollow space within said wax pattern 48, 50 selected in the range of 0.02 to 20 bar in comparison to the wax M which is not pressurized.

The wax mold 58 is then moved to completely coat an inner surface 58" of said wax mold 58 with said liquid removable material M during a cooling of said mold 58. This can take place by cooling the mold 58 while simultaneously rotating the mold 58 about at least one axis and thereby exploiting the centrifugal force to coat the inner surface 58" of said wax mold, while forming a hollow pattern 48, 50. By pressurizing an interior of the wax pattern, the wax of the pattern can be urged into contact with the inner surface 58" of the wax mold 58 to form the outer surface 48"", 50ʺʺ of the pattern 48, 50 or pattern segments 48', 50' of wax can be achieved free of defects whose outer surface 48"", 50ʺʺ is free of shrinkage effects. Such patterns 48, 50 form ideal parts of the mold 42 for forming the inner spaces 22', 24" of the rim 12. The removable material M is solidified in said wax mold 58 prior to the removal of the first and/or second pattern 50, 48 respectively the first and second pattern segments 48', 50'.

Also other methods of making a wax pattern 48, 50 or wax pattern segments 48', 50' which avoid shrinkage effects at an outer surface 48"", 50ʺʺ of the wax pattern 48, 50 or wax pattern segments 48', 50' can be employed to form the wax pattern.

The one or more patterns 48, 50 or wax pattern segments 48', 50' of removable material M are selected such that they remain stable in shape at temperatures below a melting point of said removable material M, but with said temperature corresponding to a curing temperature of the resin R or said Temperature at which the one or more patterns 48, 50 or wax pattern segments 48', 50' of removable material M remain stable in shape is selected higher than a curing temperature of the resin R. The wax can beneficially be selected as one of the following waxes.

The one or more patterns 48, 50 or wax pattern segments 48', 50' of removable material M may have a melting point selected in the temperature range of 80 to 140°C, preferably in the range of 95 to 120°C. Moreover, the one or more patterns 48, 50 or wax pattern segments 48', 50' of removable material M remain stable in shape to temperatures selected in the range of 60 to 100°C, preferably in the range of 70 to 95°C.

Typically the wax may be selected to be a wax molten at a higher temperature in a range from 60 to 140°C, in particular 70 to 120°C and to be solid at a lower temperature in a range from 30 to 100°C, in particular 60 to 90°C. The temperature difference between the higher temperature and the lower temperature is preferably selected to be less than 40°C, preferably less than 30°C, in particular less than 20°C and especially less than 10°C.

The wax may have a viscosity of greater than 2000 mPas for a temperature of less than 85°C and a viscosity of less than 800 mPas for a temperature greater than 105°C. Such waxes have found to be particularly stable in shape up to their melting point and the transition between the liquid state and the solid state takes place over comparatively small temperature ranges making said waxes more cost effective in their use.

On forming the wax pattern 48, 50 the wax mold may be heated to a temperature below a solidification temperature of the wax, in particular to a temperature selected in the range of 1 to 40°C, in particular 5 to 25°C, below the solidification temperature of the wax. In this way the wax can be solidified in a more controlled manner and the shrinkage effects at the surface of the wax pattern 48, 50 can be reduced as the wax does not automatically solidify on contact with the surface of the mold cavity.

The mold cavity may be evacuated to a pressure selected in the range of 0.02 to 0.95 bar, in particular to a pressure selected in the range of 0.05 to 0.5 bar.

To form the first and second patterns optionally having inserts 38, 38' placed at one or more predefined positions a vacuum may be applied at said wax mold using a vacuum pump. Once the desired vacuum of e.g. 0.3 bar is achieved in the wax mold, a valve may be closed to maintain the pressure within the cavity. Thereafter a liquid form of the removable material M may be introduced into the wax mold. For example, 80% of the volume of the mold 18 may be filled with liquid material M, e.g. wax W. Thereby the residual air in the mold is compressed through the addition of the wax W in such a way that the pressure in the wax mold may now be in the range of 1.02 to 20 bar depending on the initial vacuum pressure and the amount of wax added.

The wax mold may then be rotated about an axis of rotation, e.g. the axis of the rim while the wax mold is cooled, due to the pressurized gas in the wax mold and the rotation of the mold, the initially liquid wax covers the complete surface of the mold such that a wax pattern can be formed having the outer shape resembling that of the inner shape of the mold used in the RTM process, with the wax pattern having a hollow interior.

If a pattern having a particularly complex outer shape is to be formed, additional gas may be added to the wax mold prior to, during and/or after the addition of the liquid removable material M. Additionally or alternatively more than 80% of the volume of the cavity of the wax mold can be filled with the removable material M. This additional pressure in the mold can guide the liquid removable material into the complex negative geometries of the mold to ensure that a pattern having an outer surface 48"", 50ʺʺ substantially free of defects can be formed.

Fig. 10 shows a side view of an assembly of second pattern segments 50' of removable material at a support apparatus 64. The support apparatus 64 is configured to support the patterns 48, 50 and their respective segments 48', 50' during the assembly of the components of the rim 12 prior to and/or during the introduction of the components of the rim 12 into the mold 42 in which the composite material forming the rim 12 is cured.

For this purpose, the individual pattern segments 50' are connected at their ends 50". Once the pattern segments 50' have been combined to the first pattern 50, all of the sides of this are completely covered with one or more layers of webs of fiber material 54.

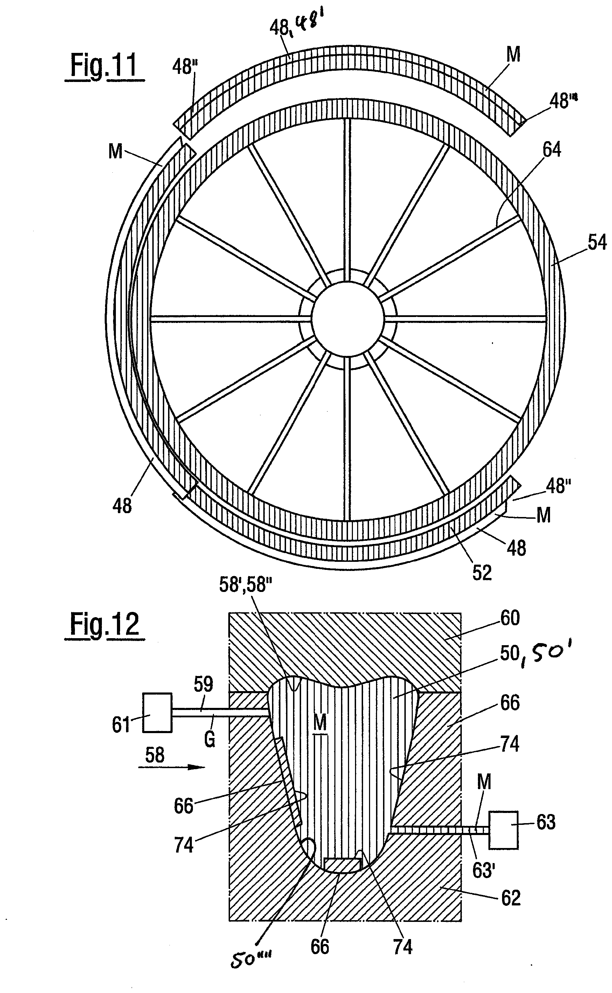

Once the first pattern is completely covered with the one or more layers of webs of material 54, the second pattern segments 48' are assembled at the covered first pattern 50 as shown in Fig. 11. During the assembly of the second pattern segments 48" to form the second pattern 48, three of four sides of the second pattern segments 48" are covered with one or more layers of webs of fiber material 52 to from the inner space 22' of the tire receiving section 22.

The covered and combined first and second patterns 50, 48 are subsequently covered with one or more further layers of webs of fiber material 56. Following this the covered patterns 48, 50 are introduced into the mold 42 as shown in Fig. 6 for the curing of the rim 12 to form the final rim 12.

Fig. 12 shows a sectional view through a mold 58 for the first patterns 50 similar to that of Fig. 8. The difference being that the mold comprises projections 66 present which are distributed about the inner surface 58" of the mold 58 in order to form e.g. the ribs 34 and/or the elevated portion 36 at the inner surface 18' of the sidewalls 18 of said rim 12. In this connection it should be noted that each inner surface 18' of the sidewall 18 can comprise a plurality of evenly spaced apart ribs, for example between 8 and 120 such ribs 34 can be provided, whereas the elevated portion 36 can be either continuous and extend around the whole length of the bottom end of the rim 12 or several elevated portions 36 can be provided at regions where the spokes 16 are connected to the rim 12.

Fig. 13 shows a partial side view of the second pattern 50 used to form the rim of Fig. 2 at a position where the spokes 16 are introduced into said rim 12. The apertures 40, 72 (see Fig. 14) of the rim are formed via projections 70 of said second pattern 50. The projections 70 are present in a respective recess 74 of said pattern 50.

In this connection it should be noted that similar recesses 74 and projections can be present in the first pattern 50.

In this connection it should be further noted that each of the patterns 48, 50 may only comprise either recesses 74 or projections 70.

Fig. 14 shows a sectional view similar to that of Fig. 3 formed using the second pattern 50 according to Fig. 13. The rim 12 comprises apertures 40, 74 integrally formed during the manufacture of said rim 12. The apertures 72 is inherently present at the bottom end 20 formed by the sidewalls 18, whereas the aperture 40 is present in the separating wall 26.

It should also be noted that simper forms of rims 12 can be formed using the method described in the foregoing namely rims 12 only having one internal space 22'. Such an internal space 22' could be formed e.g. in a manner similar to the internal space 22' of the tire receiving section 22, with the spokes then being connected to the rim 12 directly in the channel 28 formed in the separating wall 26. In this case said channel 28 may be formed deeper and/or comprise recesses at positions where the spokes 16 are attached to the rim 12. If such a comparatively simple structure is selected the wax pattern 48 used can be produced as one without the need of combining several wax patterns 48, significantly reducing the cost of manufacture of such a rim.

Thus in the RTM process described in the foregoing at least one layer of roving is provided as a first layer of fiber material 52 optionally also a second layer of fiber material 54 is provided as further roving and/or a third layer of fiber material 56 is provided as further roving. The one or more patterns covered with the roving are then placed into the mold. The mold is then evacuated to create a vacuum in the mold. The resin R is then injected into the mold at a temperature above room temperature but below the ideal hardening temperature of the resin R possibly under pressure. The resin R at elevated temperature and which is possible pressurized is more flowable than unpressurized resin R at room temperature and hence can flow more easily through the roving and the cavity in the mold in order to ensure, if possible, that no air pockets are formed in the composite material of the final device.

The resin R is then permitted to solidify, i.e. harden, at a temperature selected below the melting temperature of the wax pattern, preferably while gradually increasing the temperature of the mold between the boundaries of the second temperature range from the lower temperature to the higher temperature, e.g. from 90°C to 100°C. If required, openings and/or apertures can be applied at the hardened composite device. Following which the temperature of the mold is gradually increased from e.g. 100°C to 120°C during the third heating step in order to melt out the wax patterns.

As is known to the person skilled in the art of RTM processes, the glass transition temperature of the resin can be increased temporally in the mold during the stepwise gradual increase in temperature to above the melting point of the wax to form the device. The liquid wax can then be removed via the openings and/or apertures present at the rim, e.g. at the position of the spokes.

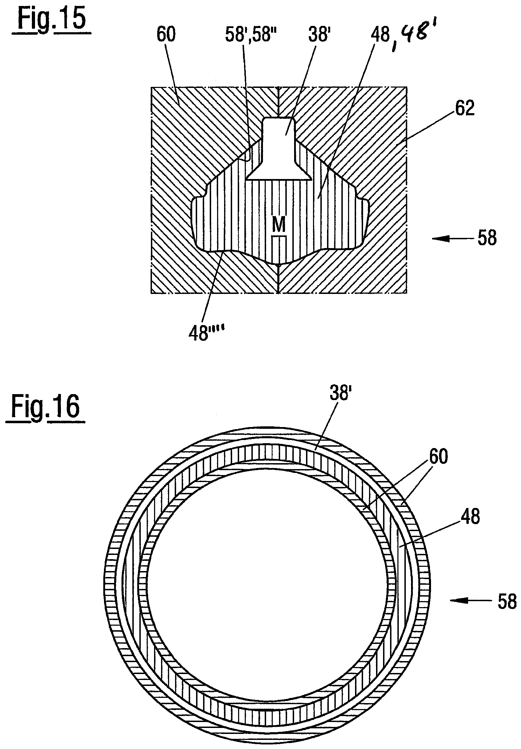

Figs. 15 to 22 show an alternative assembly of the bicycle rim 12 to the one discussed in connection with Figs. 10 and 11. In this mold 58 a first pattern 48 formed from a single piece and having an insert 38' present therein is used. This first pattern 48 forms the outer hollow space of the rim 12 in contrast to the first pattern 50 shown in Figs. 10 and 11 which forms the inner of the two hollow spaces of the rim 12 shown there.

Fig. 16 shows a top sectional view of the mold of Fig. 15, with the first pattern 48 installed therein. The insert 38' completely surrounds the outer surface 48ʺʺ of the pattern 48. The pattern 48 can be gripped via this insert 38' without the removable material M of the pattern being damaged during the handling of the first pattern 48. Thereby the outer surface 48ʺʺ of the pattern 48 can be protected against damages.

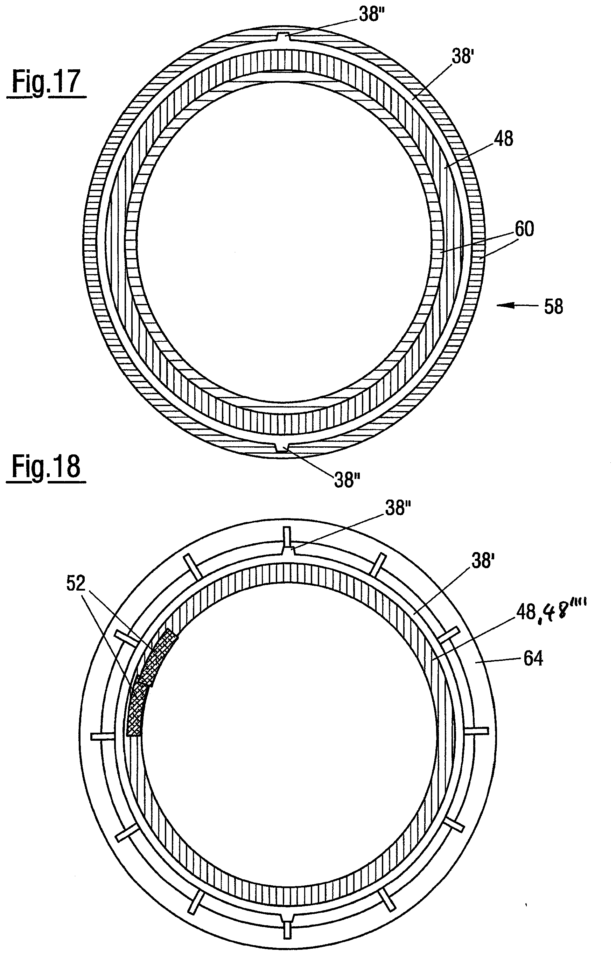

Fig. 17 shows a view similar to that of Fig. 16 for a different type of pattern 48. The insert 38' of the pattern 48 comprises two stubs 38" via which the first pattern can be held in an aligned manner during the further handling of the pattern 48. For example, as shown in Fig. 18, the insert 38' can be held in an aligned manner at the support apparatus 64. The alignment being carried out relative to the two stubs 38".

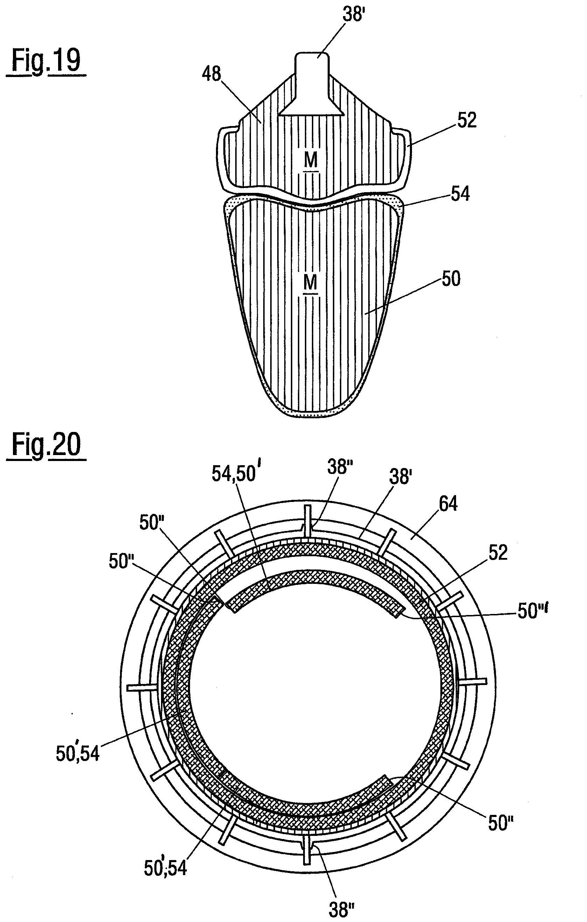

Fig. 19 shows a sectional view of the first and second patterns 48, 50 similar to Fig. 6 prior to the application of a third layer of roving of fiber material 56. In this connection it should be noted that the second pattern 50 may not have to be completely coated with the second roving of fiber material 54, but may be free of fiber material at the point of connection with the first pattern 48, since this comprises roving of first material 52 at this point of connection.

Fig. 20 shows a schematic sectional view of the assembly of second pattern segments 50' at the first pattern 48 covered with roving of fiber material 52 and 54. Like in the example shown in Figs. 10 and 11 the individual segments 50' are assembled to the completed pattern 50.

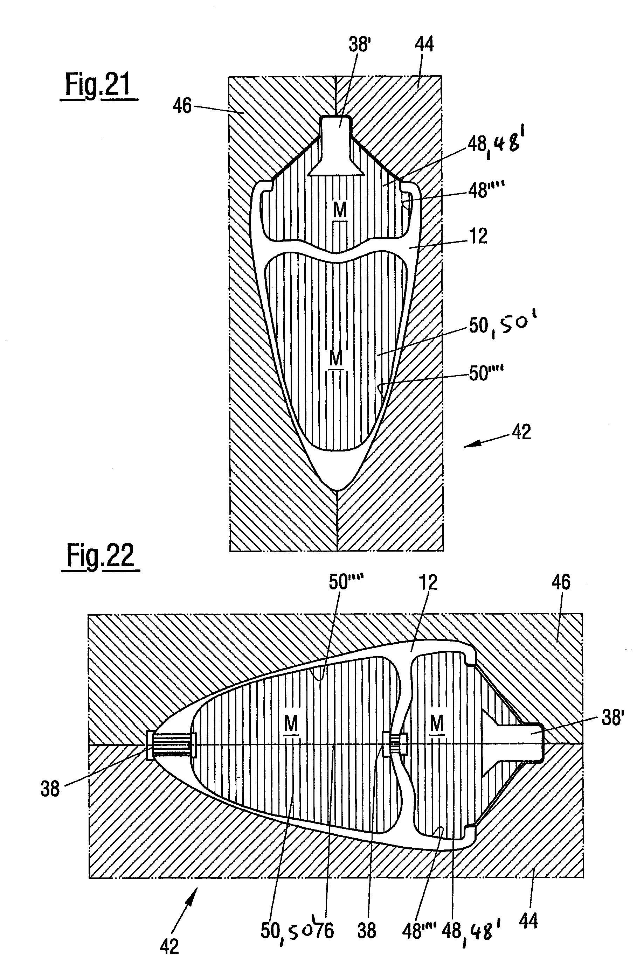

Fig. 21 shows a schematic sectional view of the first and second patterns 48, 50 of Fig. 19 in the mold 42 formed from top and bottom halves 44, 46. The rim 12 has been formed as part of the steps conducted during the RTM process, with the final temperature step not yet having been carried out in which the removable material M is removed from the internal spaces of the rim 12.

Fig. 22 shows a schematic sectional view similar to Fig. 21 with further inserts 38 incorporated in the first and second patterns 48, 50. These further inserts 38 are aligned with the first insert 38' along an axis of fixation 76. In this connection it should be noted that the first insert 38' may be coupled to the further inserts 38 using pins or the like along the axis of fixation 76 in order to ensure a correct alignment of the position of the spokes relative to the rim in order to form an as uniform as possible rim 12.

### List of reference numerals:

- 10: wheel
- 12: rim
- 14: hub and axle assembly
- 16: spokes
- 18: sidewalls
- 20: bottom end
- 22, 22': tire receiving section, internal space of 22'
- 24, 24': hollow section, internal space of 24
- 26: separating wall
- 28: channel
- 30: projections
- 32: inner surface of 24
- 34: ribs
- 36: elevated portion
- 38, 38', 38": insert, further type of insert, stub
- 40: aperture
- 42, 42', 42": mold, internal cavity of 42, inner surface of 42
- 43, 43': resin port, channel
- 44: top half
- 45, 45': vacuum port, channel
- 46: bottom half
- 47: vacuum pump
- 48, 48', 48": pattern, pattern segment
- 48"', 48ʺʺ: end, end, outer surface of 48
- 49: heating and/or cooling device
- 50, 50', 50": pattern, pattern segment, end
- 50"', 50ʺʺ: end, outer surface of 50
- 52: fiber material
- 54: fiber material
- 56: fiber material
- 58, 58', 58": wax mold, inner space of 58, inner surface of 58
- 59: gas line
- 60,: top half of 58
- 61: gas supply
- 62: bottom half of 58
- 63, 63': reservoir, supply line
- 64: support apparatus
- 66: projections of 58
- 68: recess of 50
- 70: projection of 50
- 72: aperture of 20
- 74: recess of 50
- 76: axis of fixation

- G: gas
- H: horizontal axis
- M: removable material
- R: resin
- V: vertical axis

## Claims

1. Method of assembling a bicycle rim (12), the method comprising the steps of:
providing one or more patterns (48, 50) of removable material (M), said one or more patterns (48, 50) together having an outer shape resembling an inner shape of at least part of said rim (12);
covering at least some of the outer sides of said one or more patterns (48, 50) of removable material (M) with one or more layers of webs of fiber material (52, 54, 56); said one or more layers of webs of fiber material (52, 54, 56) forming said rim (12);
placing said covered one or more patterns (48, 50) of removable material (M) into a mold (42), said mold (42) having an internal cavity (42') the internal cavity (42') corresponding to an outer shape of said rim (12);
heating said mold (42) to a first temperature in a first temperature range, wherein said bicycle rim (12) has first and second internal spaces (24', 22') that are formed by respective first and second patterns (50, 48), with the first pattern (50, 48) forming said first internal space (24') and being covered with said one or more layers of webs of fiber material (54) and
**characterised by** sequentially assembling said second pattern (48, 50) from respective second pattern segments (48', 50') at said covered first pattern (50, 48) from two, three, four, five or more second pattern segments (48', 50') to form said second pattern (48, 50) covered with one or more further layers of webs of fiber material (52, 56), and
wherein said combined first and second patterns (50, 48) are covered with one or more further layers of webs of fiber material (56).

2. Method of assembling a bicycle rim (12) according to claim 1, wherein at least one of the one or more patterns (48, 50) is formed by three, four, five or more pattern segments (50', 48') that are assembled to form the at least one of the one or more patterns (48, 50), in particular
wherein said pattern segments are covered with one or more layers of webs of fiber material (52, 54, 56) before or after the pattern segments are combined to form said pattern, and/or
wherein at least one of the one or more patterns (48, 50) comprises one or more first inserts (38') integrally formed therein.

3. Method of assembling a bicycle rim (12) according to claim 2, wherein at least one of said first inserts (38') is configured to interact with a support apparatus (64) used to assemble the rim (12).

4. Method of assembling a bicycle rim (12) according to one of the preceding claims,
wherein said first pattern (50) is formed by three, four, five or more pattern segments (50', 48') that are assembled to form the pattern (48, 50) of the respective internal space (22', 24') prior to covering the respective patterns (48, 50) forming the internal space (22', 24') with said one or more layers of webs of fiber material (52, 54, 56).

5. Method of assembling a bicycle rim (12) according to one of the preceding claims, wherein said first pattern is also formed from two, three, four, five or more first pattern segments (50') to form said first pattern (50), and/or
further comprising the step of heating said mold (42) to a second temperature in a second temperature range, and/or
further comprising the step of heating said mold (42) to a third temperature in a third temperature range.

6. Method of assembling a bicycle rim (12) according to 5,
wherein said first temperature is lower than said second temperature.

7. Method of assembling a bicycle rim (12) according to claim 5 or claim 6,
wherein said second temperature is lower than said third temperature.

8. Method of assembling a bicycle rim (12) according to one of the preceding claims,
wherein a vacuum is applied to said mold (42) during and/or prior to heating said mold (42) to said first temperature range, optionally during and/or prior to heating said mold (42) to said second and third temperature ranges, in particular wherein said vacuum is selected with a pressure in the range of 0.8 to 10⁻⁴ bar, and/or
further comprising the step of:
introducing a resin (R) into said mold (42) prior to and/or during said step of heating of said mold (42) to said first temperature,
in particular further comprising the step of:
curing said resin (R) in said mold (42), wherein said step of curing comprises at least one of the application of heat and UV light, and/or wherein said step of the application of heat comprises heating said mold (42) to said second temperature and/or heating said resin (R) on introduction into said mold (42).

9. Method of assembling a bicycle rim (12) according to claim 8, wherein said resin (R) is heated to below a curing temperature of said resin (R) on the introduction of said resin (R) into said mold (42); and/or
wherein said resin (R) is one of a one-component resin (R), a two-component resin (R) comprising a hardener, and a multi-component resin comprising one or several hardeners; and/or
wherein the resin (R) comprises a resin (R) on an epoxy basis, a resin (R) on a polyurethane basis, a resin (R) on a cyanate ester basis or another basis suitable for injection or infusion.

10. Method of assembling a bicycle rim (12) according to one of the preceding claims,
wherein said one or more patterns (48, 50) comprise at least one of one or more recesses (74) and projections (70) in an outer surface (48ʺʺ, 50ʺʺ) thereof; and/or
wherein said one or more patterns (48, 50) of removable material (M) are made of wax.

11. Method of assembling a bicycle rim (12) according to one of the preceding claims,
wherein said one or more patterns (48, 50) of removable material (M) are produced in a 3D printing process, an injection molding process and a wax casting process, in particular
wherein said wax casting process comprises the steps of:
providing a wax mold (58) having an inner space (58') having a shape corresponding to an outer shape of said pattern (48, 50);
introducing said removable material (M) into said inner space (58') of said wax mold (58) in liquid form; wherein said step of introducing said removable material (M) into said wax mold (58) comprises filling between 40 and 99% of said inner space (58') of the wax mold (58) with liquid removable material (M);
introducing gas (G) into said liquid removable material (M) present in said wax mold (58) and pressurizing said removable material (M) present in said wax mold (58) with a pressure difference between an outside of said formed wax pattern (48, 50) and a hollow space within said wax pattern (48, 50) selected in the range of 0.02 to 20 bar;
moving said wax mold (58) to completely coat an inner surface (58") of said wax mold (58) with said liquid removable material (M); and
solidifying the removable material (M) in said wax mold (58).

12. Method of assembling a bicycle rim (12) according to one of the preceding claims,
wherein said one or more patterns (48, 50) of removable material (M) have a melting point selected in the temperature range of 80 to 140°C, preferably in the range of 95 to 120°C; and/or
wherein said one or more patterns (48, 50) of removable material (M) remain stable in shape to temperatures selected in the range of 60 to 100°C, preferably in the range of 70 to 95°C; and/or
wherein said one or more patterns (48, 50) of removable material (M) remain stable in shape at temperatures below a melting point of said removable material (M).

13. Method of assembling a bicycle rim (12) according to one of the preceding claims,
wherein said one or more patterns (48, 50) each have one or more second inserts (38) present therein, with said second inserts being fixedly attached to said bicycle rim (12),
in particular wherein said second inserts (38) are provided at positions for spokes (16) of said rim (12) and/or at a position of a valve associated with a wheel (10) formed by said rim (12), and/or
wherein said second inserts (38) are directly or indirectly attached to said first inserts (38').

14. Method of assembling a bicycle rim (12) according to one of the preceding claims,
wherein said one or more layers of fiber material and/or further layers of webs of material (52, 54, 56) comprise carbon fibers, glass fibers, basalt fibers, wood fibers, hemp fibers, aramid fibers, and polyester fibers, respectively in dry condition or as a prepreg; and/or
wherein at least one of said one or more patterns (48, 50) is supported at a respective support apparatus (64); and/or
wherein said one or more patterns (48, 50) of removable material remain stable in shape at temperatures below a melting point of said removable material (M), and/or
wherein one or more of the patterns (48, 50) of removable material (M) are formed by first pattern segments (48') and/or second pattern segments (50') that remain stable in shape at temperatures below a melting point of said removable material (M),
in particular wherein said first pattern (48) is formed by first pattern segments (48'), in particular only formed by first pattern segments (48') and/or wherein said second pattern (50) is formed by second pattern segments (50'), in particular only formed by second pattern segments (50'), and/or wherein said first pattern segments (48') and/or said second pattern segments (50') are bonded one to another using a pattern material comprising, in particular consisting of, said removable material (M) and/or by means of welding.

15. Method of assembling a bicycle rim (12) according to claim 14, wherein said first pattern segments (48') and/or said second pattern segments (50') are bonded one to another at respective first and second ends (48", 48‴, 50", 50‴) using said pattern material comprising, in particular consisting of, said removable material (M), and/or
wherein (the) first and second ends (48", 48‴, 50", 50‴) of said first pattern segments (48') and/or of said second pattern segments (50') are formed complementary to one another, and/or
wherein said first and second pattern segments have a generally arc-shaped outer shaped viewed in a cross-section thereof.

16. Method of assembling a bicycle rim (12) according to any one of the preceding claims, wherein said one or more patterns (48, 50) have an outer surface (48ʺʺ, 50ʺʺ) with an average surface roughness Ra below 200 µm, in particular below 150 µm and especially below 100 µm, and/or wherein two patterns (48, 50) of removable material (M) are provided, with each pattern (48, 50) of removable material (M) having an outer shape forming a mold for an inner shape of a respective cavity of said rim (12), with said removable material remaining stable in shape at temperatures below a melting point of said removable material (M) at standard temperatures and pressures, and wherein the same removable material (M) is used for each of the two patterns (48, 50) of removable material (M).

17. A bicycle rim (12) obtained by a method in accordance with one of the preceding claims, said bicycle rim (12) being formed of composite material, said bicycle rim (12) having one or more internal spaces (22', 24') formed by walls (18, 26), with a wall thickness of said walls (18, 26) of said bicycle rim (12) having a predefinable wall thickness with a tolerance of the wall thickness lying in the range of ± 0.5 mm, in particular of ± 0.1 mm, especially of ± 0.05 mm, for a wall thickness selected in the range of 1 to 4 mm, in particular for a length of material of said bicycle rim (12) cut from said rim in the range of 1 to 5 mm and at a width selected in the range of 0.5 to 2.5 cm, in particular
wherein said bicycle rim (12) has a tolerance of the wall thickness lying in the range of ± 0.3 mm, especially of ±0.2 mm, for a wall thickness selected in the range of 1 to 4 mm, and/or
wherein said bicycle rim (12) has a void content of less than 2%, in particular of less than 1.5%, and/or
wherein said bicycle rim (12) has a tolerance of the surface profile of ± 0.1 mm.

18. The bicycle rim (12) according to claim 17, wherein said bicycle rim (12) has a tolerance of the surface profile of ± 0.05 mm, in particular of ± 0.03 mm, especially of ± 0.01 mm, and/or
wherein said bicycle rim comprises reinforcing ribs (34), reinforcing beads, stiffening corrugations and/or reinforcing platforms (36) formed at at least part of an inner surface (34) of said bicycle rim (12), and/or
wherein said bicycle rim (12) comprises inserts (38) present at positions of said bicycle rim (12) corresponding to positions of spokes (16) and/or of a valve associated with a wheel (10) formed by said rim (12), and/or
wherein said bicycle rim (12) comprises apertures (40, 72) inherently present in at least one wall (18, 26) of the bicycle rim (12).

## Patentansprüche

1. Verfahren zum Zusammenbauen einer Fahrradfelge (12), wobei das Verfahren die Schritte umfasst:
Bereitstellen eines oder mehrerer Muster (48, 50) aus entfernbarem Material (M), wobei das eine oder die mehreren Muster (48, 50) zusammen eine äußere Form aufweisen, die einer inneren Form mindestens eines Teils der Felge (12) ähnelt;
Bedecken mindestens einiger der Außenseiten des einen oder der mehreren Muster (48, 50) aus entfernbarem Material (M) mit einer oder mehreren Schichten von Bahnen aus Fasermaterial (52, 54, 56); wobei die eine oder die mehreren Schichten von Bahnen aus Fasermaterial (52, 54, 56) die Felge (12) bilden;
Platzieren des einen oder der mehreren bedeckten Muster (48, 50) aus entfernbarem Material (M) in eine Form (42), wobei die Form (42) einen inneren Hohlraum (42') aufweist, wobei der innere Hohlraum (42') einer äußeren Form der Felge (12) entspricht;
Erwärmen der Form (42) auf eine erste Temperatur in einem ersten Temperaturbereich,
wobei die Fahrradfelge (12) einen ersten und einen zweiten Innenraum (24', 22') aufweist, die durch ein jeweiliges erstes und zweites Muster (50, 48) gebildet werden, wobei das erste Muster (50, 48) den ersten Innenraum (24') bildet und mit der einen oder den mehreren Schichten von Bahnen aus Fasermaterial (54) bedeckt ist, und **gekennzeichnet durch** Zusammenbauen des zweiten Musters (48, 50) aus jeweiligen zweiten Mustersegmenten (48', 50') an dem bedeckten ersten Muster (50, 48) aus zwei, drei, vier, fünf oder mehr zweiten Mustersegmenten (48', 50'), um das zweite Muster (48, 50) zu bilden, das mit einer oder mehreren weiteren Schichten von Bahnen aus Fasermaterial (52, 56) bedeckt ist, und
wobei das kombinierte erste und zweite Muster (50, 48) mit einer oder mehreren weiteren Schichten von Bahnen aus Fasermaterial (56) bedeckt sind.

2. Verfahren zum Zusammenbauen einer Fahrradfelge (12) nach Anspruch 1, wobei mindestens eines des einen oder der mehreren Muster (48, 50) durch drei, vier, fünf oder mehr Mustersegmente (50', 48') gebildet wird, die zusammengebaut werden, um das mindestens eine des einen oder der mehreren Muster (48, 50) zu bilden,
wobei insbesondere die Mustersegmente mit einer oder mehreren Schichten von Bahnen aus Fasermaterial (52, 54, 56) bedeckt werden, bevor oder nachdem die Mustersegmente kombiniert werden, um das Muster zu bilden, und/oder
wobei mindestens eines des einen oder der mehreren Muster (48, 50) einen oder mehrere erste Einsätze (38') umfasst, die integral darin gebildet sind.

3. Verfahren zum Zusammenbauen einer Fahrradfelge (12) nach Anspruch 2, wobei mindestens einer der ersten Einsätze (38') konfiguriert ist, um mit einer Stützvorrichtung (64) zu interagieren, die verwendet wird, um die Felge (12) zusammenzubauen.

4. Verfahren zum Zusammenbauen einer Fahrradfelge (12) nach einem der vorhergehenden Ansprüche,
wobei das erste Muster (50) durch drei, vier, fünf oder mehr Mustersegmente (50', 48') gebildet wird, die zusammengebaut werden, um das Muster (48, 50) des jeweiligen Innenraums (22', 24') zu bilden, bevor die jeweiligen Muster (48, 50), die den Innenraum (22', 24') bilden, mit der einen oder den mehreren Schichten von Bahnen aus Fasermaterial (52, 54, 56) bedeckt werden.

5. Verfahren zum Zusammenbauen einer Fahrradfelge (12) nach einem der vorhergehenden Ansprüche, wobei das erste Muster auch aus zwei, drei, vier, fünf oder mehr ersten Mustersegmenten (50') gebildet wird, um das erste Muster (50) zu bilden, und/oder
ferner umfassend den Schritt des Erwärmens der Form (42) auf eine zweite Temperatur in einem zweiten Temperaturbereich, und/oder
ferner umfassend den Schritt des Erwärmens der Form (42) auf eine dritte Temperatur in einem dritten Temperaturbereich.

6. Verfahren zum Zusammenbauen einer Fahrradfelge (12) nach Anspruch 5,
wobei die erste Temperatur niedriger als die zweite Temperatur ist.

7. Verfahren zum Zusammenbauen einer Fahrradfelge (12) nach einem der Ansprüche 5 oder 6,
wobei die zweite Temperatur niedriger als die dritte Temperatur ist.

8. Verfahren zum Zusammenbauen einer Fahrradfelge (12) nach einem der vorhergehenden Ansprüche,
wobei während und/oder vor dem Erwärmen der Form (42) auf den ersten Temperaturbereich, optional während und/oder vor dem Erwärmen der Form (42) auf den zweiten und dritten Temperaturbereich, einen Unterdruck an die Form (42) angelegt wird, wobei der Unterdruck insbesondere mit einem Druck im Bereich von 0,8 bis 10⁻⁴ bar ausgewählt wird, und/oder ferner umfassend den folgenden Schritt:
Einführen eines Harzes (R) in die Form (42) vor und/oder während des Schritts des Erwärmens der Form (42) auf die erste Temperatur, insbesondere ferner umfassend den folgenden Schritt:
Aushärten des Harzes (R) in der Form (42), wobei der Schritt des Aushärtens mindestens eines von der Anwendung von Wärme und UV-Licht umfasst, und/oder
wobei der Schritt der Anwendung von Wärme das Erwärmen der Form (42) auf die zweite Temperatur und/oder das Erwärmen des Harzes (R) beim Einführen in die Form (42) umfasst.

9. Verfahren zum Zusammenbauen einer Fahrradfelge (12) nach Anspruch 8, wobei das Harz (R) beim Einführen des Harzes (R) in die Form (42) auf unter eine Aushärtungstemperatur des Harzes (R) erwärmt wird; und/oder
wobei das Harz (R) eines von einem Einkomponentenharz (R), einem Zweikomponentenharz (R), das einen Härter umfasst, und einem Mehrkomponentenharz, das einen oder mehrere Härter umfasst, ist; und/oder
wobei das Harz (R) ein Harz (R) auf Epoxidbasis, ein Harz (R) auf Polyurethanbasis, ein Harz (R) auf Cyanatesterbasis oder eine andere Basis, die zur Injektion oder Infusion geeignet ist, umfasst.

10. Verfahren zum Zusammenbauen einer Fahrradfelge (12) nach einem der vorhergehenden Ansprüche,
wobei das eine oder die mehreren Muster (48, 50) mindestens eines von einer oder mehreren Ausnehmungen (74) und Vorsprüngen (70) in einer Außenfläche (48"", 50"") davon umfassen; und/oder
wobei das eine oder die mehreren Muster (48, 50) aus entfernbarem Material (M) aus Wachs hergestellt sind.

11. Verfahren zum Zusammenbauen einer Fahrradfelge (12) nach einem der vorhergehenden Ansprüche,
wobei das eine oder die mehreren Muster (48, 50) aus entfernbarem Material (M) in einem 3D-Druckverfahren, einem Spritzgussverfahren und einem Wachsgussverfahren hergestellt werden,
wobei insbesondere das Wachsgussverfahren die Schritte umfasst:
Bereitstellen einer Wachsform (58), die einen Innenraum (58') aufweist, der eine Form aufweist, die einer äußeren Form des Musters (48, 50) entspricht;
Einführen des entfernbaren Materials (M) in den Innenraum (58') der Wachsform (58) in flüssiger Form; wobei der Schritt des Einführens des entfernbaren Materials (M) in die Wachsform (58) das Füllen von zwischen 40 und 99 % des Innenraums (58') der Wachsform (58) mit flüssigem entfernbarem Material (M) umfasst;
Einführen von Gas (G) in das flüssige entfernbare Material (M), das in der Wachsform (58) vorhanden ist, und Druckbeaufschlagen des entfernbaren Materials (M), das in der Wachsform (58) vorhanden ist, mit einem Druckunterschied zwischen einer Außenseite des gebildeten Wachsmusters (48, 50) und einem Hohlraum innerhalb des Wachsmusters (48, 50), der im Bereich von 0,02 bis 20 bar ausgewählt ist;
Bewegen der Wachsform (58), um eine Innenfläche (58") der Wachsform (58) vollständig mit dem flüssigen entfernbaren Material (M) zu beschichten; und
Verfestigen des entfernbaren Materials (M) in der Wachsform (58).

12. Verfahren zum Zusammenbauen einer Fahrradfelge (12) nach einem der vorhergehenden Ansprüche,
wobei das eine oder die mehreren Muster (48, 50) aus entfernbarem Material (M) einen Schmelzpunkt aufweisen, der im Temperaturbereich von 80 bis 140 °C, vorzugsweise im Bereich von 95 bis 120 °C, ausgewählt ist; und/oder
wobei das eine oder die mehreren Muster (48, 50) aus entfernbarem Material (M) bis zu Temperaturen, die im Bereich von 60 bis 100 °C, vorzugsweise im Bereich von 70 bis 95 °C, ausgewählt sind, formstabil bleiben; und/oder
wobei das eine oder die mehreren Muster (48, 50) aus entfernbarem Material (M) bei Temperaturen unterhalb eines Schmelzpunkts des entfernbaren Materials (M) formstabil bleiben.

13. Verfahren zum Zusammenbauen einer Fahrradfelge (12) nach einem der vorhergehenden Ansprüche,
wobei das eine oder die mehreren Muster (48, 50) jeweils einen oder mehrere zweite Einsätze (38) aufweisen, die darin vorhanden sind, wobei die zweiten Einsätze fest an der Fahrradfelge (12) angebracht sind,
wobei insbesondere die zweiten Einsätze (38) an Positionen für Speichen (16) der Felge (12) und/oder an einer Position eines Ventils bereitgestellt sind, das einem Rad (10) zugeordnet ist, das durch die Felge (12) gebildet ist, und/oder
wobei die zweiten Einsätze (38) direkt oder indirekt an den ersten Einsätzen (38') angebracht sind.

14. Verfahren zum Zusammenbauen einer Fahrradfelge (12) nach einem der vorhergehenden Ansprüche,
wobei die eine oder die mehreren Schichten von Fasermaterial und/oder weitere Schichten von Bahnen aus Material (52, 54, 56) Kohlenstofffasern, Glasfasern, Basaltfasern, Holzfasern, Hanffasern, Aramidfasern bzw. Polyesterfasern in trockenem Zustand oder als Prepreg umfassen; und/oder
wobei mindestens eines des einen oder der mehreren Muster (48, 50) an einer jeweiligen Stützvorrichtung (64) gestützt wird; und/oder wobei das eine oder die mehreren Muster (48, 50) aus entfernbarem Material bei Temperaturen unterhalb eines Schmelzpunkts des entfernbaren Materials (M) formstabil bleiben, und/oder
wobei eines oder mehrere der Muster (48, 50) aus entfernbarem Material (M) durch erste Mustersegmente (48') und/oder zweite Mustersegmente (50') gebildet werden, die bei Temperaturen unterhalb eines Schmelzpunkts des entfernbaren Materials (M) formstabil bleiben,
wobei insbesondere das erste Muster (48) durch erste Mustersegmente (48') gebildet wird, insbesondere nur durch erste Mustersegmente (48') gebildet wird, und/oder wobei das zweite Muster (50) durch zweite Mustersegmente (50') gebildet wird, insbesondere nur durch zweite Mustersegmente (50') gebildet wird, und/oder
wobei die ersten Mustersegmente (48') und/oder die zweiten Mustersegmente (50') unter Verwendung eines Mustermaterials, das das entfernbare Material (M) umfasst, insbesondere daraus besteht, und/oder mittels Schweißen miteinander verbunden werden.

15. Verfahren zum Zusammenbauen einer Fahrradfelge (12) nach Anspruch 14, wobei die ersten Mustersegmente (48') und/oder die zweiten Mustersegmente (50') an jeweiligen ersten und zweiten Enden (48", 48‴, 50", 50'") unter Verwendung des Mustermaterials, das das entfernbare Material (M) umfasst, insbesondere daraus besteht, miteinander verbunden werden, und/oder
wobei (die) erste(n) und zweite(n) Enden (48", 48‴, 50", 50‴) der ersten Mustersegmente (48') und/oder der zweiten Mustersegmente (50') komplementär zueinander gebildet werden, und/oder
wobei die ersten und zweiten Mustersegmente eine im Allgemeinen bogenförmige äußere Form aufweisen, wenn sie in einem Querschnitt davon betrachtet werden.

16. Verfahren zum Zusammenbauen einer Fahrradfelge (12) nach einem der vorhergehenden Ansprüche, wobei das eine oder die mehreren Muster (48, 50) eine Außenfläche (48ʺʺ, 50ʺʺ) mit einer durchschnittlichen Oberflächenrauheit Ra unter 200 µm, insbesondere unter 150 µm und insbesondere unter 100 µm aufweisen, und/oder
wobei zwei Muster (48, 50) aus entfernbarem Material (M) bereitgestellt werden, wobei jedes Muster (48, 50) aus entfernbarem Material (M) eine äußere Form aufweist, die eine Form für eine innere Form eines jeweiligen Hohlraums der Felge (12) bildet, wobei das entfernbare Material bei Temperaturen unterhalb eines Schmelzpunkts des entfernbaren Materials (M) bei Standardtemperaturen und -drücken formstabil bleibt, und wobei dasselbe entfernbare Material (M) für jedes der zwei Muster (48, 50) aus entfernbarem Material (M) verwendet wird.

17. Fahrradfelge (12), die durch ein Verfahren nach einem der vorhergehenden Ansprüche erhalten wird, wobei die Fahrradfelge (12) aus Verbundmaterial gebildet ist, wobei die Fahrradfelge (12) einen oder mehrere Innenräume (22', 24') aufweist, die durch Wände (18, 26) gebildet sind, wobei eine Wanddicke der Wände (18, 26) der Fahrradfelge (12) eine vordefinierbare Wanddicke mit einer Toleranz der Wanddicke, die im Bereich von ± 0,5 mm, insbesondere von ± 0,1 mm, insbesondere von ± 0,05 mm, liegt, für eine Wanddicke, die im Bereich von 1 bis 4 mm ausgewählt ist, insbesondere für eine Materiallänge der Fahrradfelge (12), die von der Felge im Bereich von 1 bis 5 mm geschnitten ist, und bei einer Breite, die im Bereich von 0,5 bis 2,5 cm ausgewählt ist, aufweist,
wobei insbesondere die Fahrradfelge (12) eine Toleranz der Wanddicke, die im Bereich von ± 0,3 mm, insbesondere von ± 0,2 mm, liegt, für eine Wanddicke, die im Bereich von 1 bis 4 mm ausgewählt ist, aufweist, und/oder
wobei die Fahrradfelge (12) einen Hohlraumgehalt von weniger als 2 %, insbesondere von weniger als 1,5 %, aufweist, und/oder wobei die Fahrradfelge (12) eine Toleranz des Oberflächenprofils von ± 0,1 mm aufweist.

18. Fahrradfelge (12) nach Anspruch 17, wobei die Fahrradfelge (12) eine Toleranz des Oberflächenprofils von ± 0,05 mm, insbesondere von ± 0,03 mm, insbesondere von ± 0,01 mm, aufweist, und/oder
wobei die Fahrradfelge Verstärkungsrippen (34), Verstärkungswülste, Versteifungswellen und/oder Verstärkungsplattformen (36), die an mindestens einem Teil einer Innenfläche (34) der Fahrradfelge (12) ausgebildet sind, umfasst, und/oder
wobei die Fahrradfelge (12) Einsätze (38) umfasst, die an Positionen der Fahrradfelge (12) vorhanden sind, die Positionen von Speichen (16) und/oder eines Ventils entsprechen, das einem Rad (10) zugeordnet ist, das durch die Felge (12) gebildet ist, und/oder
wobei die Fahrradfelge (12) Öffnungen (40, 72) umfasst, die inhärent in mindestens einer Wand (18, 26) der Fahrradfelge (12) vorhanden sind.

## Revendications

1. Procédé d'assemblage d'une jante (12) de bicyclette, le procédé comprenant les étapes consistant à :
fournir un ou plusieurs motifs (48, 50) d'un matériau (M) retirable, lesdits un ou plusieurs motifs (48, 50) ayant conjointement une forme extérieure ressemblant à une forme intérieure d'une partie au moins de ladite jante (12) ;
recouvrir certains au moins des côtés extérieurs desdits un ou plusieurs motifs (48, 50) de matériau (M) retirable d'une ou de plusieurs couches de toiles de matériaux en fibres (52, 54, 56) ; lesdites une ou plusieurs couches de toiles de matériaux en fibres (52, 54, 56) formant ladite jante (12) ;
placer lesdits un ou plusieurs motifs (48, 50) recouverts de matériau (M) retirable jusque dans un moule (42), ledit moule (42) ayant une cavité interne (42'), la cavité interne (42') correspondant à une forme extérieure de ladite jante (12) ;
chauffer ledit moule (42) à une première température dans une première plage de température,
dans lequel ladite jante (12) de bicyclette a des premier et second espaces (24', 22') internes qui sont formés par des premier et second motifs (50, 48) respectifs, le premier motif (50, 48) formant ledit premier espace (24') interne et étant recouvert desdites une ou de plusieurs couches de toiles de matériaux (54) en fibres, et
**caractérisé par** l'étape consistant à
assembler séquentiellement ledit second motif (48, 50) à partir de segments (48', 50') de second motif respectifs au niveau dudit premier motif (50, 48) recouvert à partir de deux, trois, quatre, cinq ou plusieurs segments (48', 50') de second motif pour former ledit second motif (48, 50) recouvert desdites une ou plusieurs couches supplémentaires de toiles de matériaux (52, 56) en fibres, et
dans lequel lesdits premier et second motif (50, 48) combinés sont recouverts d'une ou de plusieurs couches supplémentaires de toiles de matériaux (56) en fibres.

2. Procédé d'assemblage d'une jante (12) de bicyclette selon la revendication 1, dans lequel l'un au moins desdits un ou plusieurs motifs (48, 50) est formé par trois, quatre, cinq ou plusieurs segments (50',48') qui sont assemblés pour former l'un au moins desdits un ou plusieurs motifs (48, 50), en particulier
dans lequel lesdits segments de motif sont recouverts d'une ou de plusieurs couches de toiles de matériaux (52, 54, 56) en fibres avant ou après combinaison des segments de motif pour former ledit motif, et/ou
dans lequel l'un au moins desdits un ou plusieurs motifs (48, 50) comprend un ou plusieurs premiers inserts (38') formés de manière intégrale à l'intérieur de celui-ci.

3. Procédé d'assemblage d'une jante (12) de bicyclette selon la revendication 2, dans lequel l'un au moins desdits premiers inserts (38') est configuré pour interagir avec un appareil (64) de support utilisé pour assembler la jante (12).

4. Procédé d'assemblage d'une jante (12) de bicyclette selon l'une quelconque des revendications précédentes,
dans lequel ledit premier motif (50) est formé par trois, quatre, cinq ou plusieurs segments (50', 48') de motif qui sont assemblés pour former le motif (48, 50) de l'espace (22', 24') interne respectif avant de recouvrir les motifs (48, 50) respectifs formant l'espace (22', 24') interne desdites une ou plusieurs couches de toiles de matériaux (52, 54, 56) en fibres.

5. Procédé d'assemblage d'une jante (12) de bicyclette selon l'une quelconque des revendications précédentes, dans lequel ledit premier motif est également formé à partir de deux, trois, quatre, cinq ou plusieurs segments (50') de premier motif pour former ledit premier motif (50), et/ou
comprenant en outre l'étape consistant à chauffer ledit moule (42) à une deuxième température dans une deuxième plage de température, et/ou
comprenant en outre l'étape consistant à chauffer ledit moule (42) à une troisième température dans une troisième plage de température.

6. Procédé d'assemblage d'une jante (12) de bicyclette selon la revendication 5,
dans lequel ladite première température est inférieure à ladite deuxième température.

7. Procédé d'assemblage d'une jante (12) de bicyclette selon la revendication 5 ou 6,
dans lequel ladite deuxième température est inférieure à ladite troisième température.

8. Procédé d'assemblage d'une jante (12) de bicyclette selon l'une quelconque des revendications précédentes,
dans lequel un vide est appliqué audit moule (42) pendant et/ou avant de chauffer ledit moule (42) à ladite première plage de température, en option pendant ou avant de chauffer ledit moule (42) auxdites deuxième et troisième plages de température, en particulier dans lequel ledit vide est sélectionné avec une pression dans la plage de 0,8 à 10⁻⁴ bar, et/ou
comprenant en outre l'étape consistant à :
introduire une résine (R) jusque dans ledit moule (42) avant et/ou pendant ladite étape de chauffage dudit moule (42) à ladite première température,
en particulier comprenant en outre l'étape consistant à :
faire durcir ladite résine (R) dans ledit moule (42), dans lequel ladite étape de durcissement comprend au moins une application parmi l'application de chaleur et l'application de lumière UV, et/ou
dans lequel ladite étape d'application de chaleur comprend de chauffer ledit moule (42) à ladite deuxième température et/ou de chauffer ladite résine (R) lors de l'introduction dans ledit moule (42).

9. Procédé d'assemblage d'une jante (12) de bicyclette selon la revendication 8,
dans lequel ladite résine (R) est chauffée jusqu'à en dessous d'une température de durcissement de ladite résine (R) lors de l'introduction de ladite résine (R) jusque dans ledit moule (42) ; et/ou
dans lequel ladite résine (R) est l'une d'une résine (R) à un composant, d'une résine (R) à deux composants comprenant un durcisseur, et d'une résine à composants multiples comprenant un ou plusieurs durcisseurs ; et/ou
dans lequel la résine (R) comprend une résine (R) à base d'époxy, une résine (R) à base de polyuréthane, une résine (R) à base d'ester de cyanate, ou une autre base appropriée pour une injection ou une infusion.

10. Procédé d'assemblage d'une jante (12) de bicyclette selon l'une quelconque des revendications précédentes,
dans lequel lesdits un ou plusieurs motifs (48, 50) comprennent l'un au moins d'un ou de plusieurs évidements (74) et projections (70) dans une surface extérieure (48"", 50"") de ceux-ci ; et/ou
dans lequel lesdits un ou plusieurs motifs (48, 50) de matériau (M) retirable sont faits en cire.

11. Procédé d'assemblage d'une jante (12) de bicyclette selon l'une quelconque des revendications précédentes,
dans lequel lesdits un ou plusieurs motifs (48, 50) de matériau (M) retirable sont produits dans un processus d'impression 3D, un processus de moulage par injection, et un processus de coulage à la cire, en particulier
dans lequel ledit processus de coulage à la cire comprend les étapes consistant à :
fournir un moule (58) de cire ayant un espace (58') intérieur ayant une forme correspondant à une forme extérieure dudit motif (48, 50) ;
introduire ledit matériau (M) retirable jusque dans ledit espace (58') intérieur dudit moule (58) de cire dans une forme liquide ; dans lequel ladite étape d'introduction dudit matériau (M) retirable jusque dans ledit moule (58) de cire comprend de remplir entre 40 et 99 % dudit espace (58') intérieur du moule (58) de cire avec un matériau (M) retirable liquide ;
introduire un gaz (G) jusque dans ledit matériau (M) retirable liquide présent dans ledit moule (58) de cire et pressuriser ledit matériau (M) retirable présent dans ledit moule (58) de cire avec une différence de pression entre un extérieur dudit motif (48, 50) de cire formé et un espace creux à l'intérieur dudit motif (48, 50) de cire sélectionnée dans la plage de 0,02 à 20 bar ;
déplacer ledit moule (48) de cire pour enrober entièrement une surface (58") intérieure dudit moule (58) de cire avec un matériau (M) retirable liquide ; et
solidifier le matériau (M) retirable dans ledit moule (58) de cire.

12. Procédé d'assemblage d'une jante (12) de bicyclette selon l'une quelconque des revendications précédentes,
dans lequel lesdits un ou plusieurs motifs (48, 50) de matériau (M) retirable ont un point de fusion sélectionné dans la plage de température de 80 à 140 °C, de préférence dans la plage de 95 à 120 °C ; et/ou
dans lequel lesdits un ou plusieurs motifs (48, 50) de matériau (M) retirable présentent une stabilité de forme à des températures sélectionnées dans la plage de 60 à 100 °C, de préférence dans la plage de 70 à 95 °C ; et/ou
dans lequel lesdits un ou plusieurs motifs (48, 50) de matériau (M) retirable présentent une stabilité de forme à des températures en dessous d'un point de fusion dudit matériau (M) retirable.

13. Procédé d'assemblage d'une jante (12) de bicyclette selon l'une quelconque des revendications précédentes,
dans lequel lesdits un ou plusieurs motifs (48, 50) ont chacun un ou plusieurs seconds inserts (38) présent à l'intérieur de ceux-ci, lesdits seconds inserts étant attachés de manière fixe à ladite jante (12) de bicyclette,
en particulier dans lequel lesdits seconds inserts (38) sont prévus à des positions pour des rayons (16) de ladite jante (12) et/ou à une position d'une valve associée à une roue (10) formée par ladite jante (12), et/ou
dans lequel lesdits seconds inserts (38) sont attachés directement ou indirectement auxdits premier inserts (38').

14. Procédé d'assemblage d'une jante (12) de bicyclette selon l'une quelconque des revendications précédentes,
dans lequel lesdites une ou plusieurs couches de matériaux en fibres et/ou couches supplémentaires de toiles de matériaux (52, 54 56) comprennent des fibres de carbone, des fibres de verre, des fibres de basalte, des fibres de bois, des fibres de chanvre, des fibres d'aramide, et des fibres de polyester, respectivement dans une condition sèche ou en tant que préimprégnés ; et/ou
dans lequel l'un au moins desdits un ou plusieurs motifs (48, 50) est supporté au niveau d'un appareil (64) de support respectif ; et/ou
dans lequel lesdits un ou plusieurs motifs (48, 50) de matériau retirable présentent une stabilité de forme à des températures en dessous d'un point de fusion dudit matériau (M) retirable, et/ou
dans lequel un ou plusieurs des motifs (48, 50) de matériau (M) retirable sont formés par des segments (48') de premier motif et/ou des segments (50') de second motif qui présentent une stabilité de forme à des températures en dessous d'un point de fusion dudit matériau (M) retirable,
en particulier dans lequel ledit premier motif (48) est formé par des segments (48') de premier motif, en particulier est uniquement formé par des segments (48') de premier motif et/ou
dans lequel ledit second motif (50) est formé par des segments (50') de second motif, en particulier est uniquement formé par des segments (50') de second motif, et/ou
dans lequel lesdits segments (48') de premier motif et/ou lesdits segments (50') de second motif sont liés les uns aux autres en utilisant un matériau à motif comprenant ledit matériau (M) retirable, en particulier constitué de celui-ci, et/ou via des moyens de soudage.

15. Procédé d'assemblage d'une jante (12) de bicyclette selon la revendication 14, dans lequel lesdits segments (48') de premier motif et/ou lesdits segments (50') de second motif sont liés les uns aux autres au niveau de premières et secondes extrémités (48", 48"', 50", 50"') respectives en utilisant ledit matériau à motif comprenant ledit matériau (M) retirable, en particulier constitué de celui-ci, et/ou
dans lequel (les) premières et secondes extrémités (48", 48"', 50", 50"') desdits segments (48') de premier motif et/ou desdits segments (50') de second motif sont formées de manière complémentaire les unes aux autres, et/ou
dans lequel lesdits segments de premier et second motif ont une forme extérieure généralement arquée dans une vue en section transversale de ceux-ci.

16. Procédé d'assemblage d'une jante (12) de bicyclette selon l'une quelconque des revendications précédentes, dans lequel lesdits un ou plusieurs motifs (48, 50) ont une surface extérieure (48"", 50ʺʺ) présentant une rugosité Ra surfacique moyenne en dessous de 200 µm, en particulier en dessous de 150 µm, et plus particulièrement en dessous de 100 µm, et/ou dans lequel il est prévu deux motifs (48, 50) de matériau (M) retirable, chaque motif (48, 50) de matériau (M) retirable ayant une forme extérieure formant un moule pour une forme intérieure d'une cavité respective de ladite jante (12), ledit matériau retirable présentant une stabilité de forme à des températures en dessous d'un point de fusion dudit matériau (M) retirable à des températures et des pressions standard, et dans lequel le même matériau (M) retirable est utilisé pour chacun des deux motifs (48, 50) de matériau (M) retirable.

17. Jante (12) de bicyclette obtenue par un procédé selon l'une quelconque des revendications précédentes, ladite jante (12) de bicyclette étant formée d'un matériau composite, ladite jante (12) de bicyclette ayant un ou plusieurs espaces (22', 24') internes formés par des parois (18, 26), une épaisseur de paroi desdites parois (18, 26) de ladite jante (12) de bicyclette (12) ayant une épaisseur de paroi pouvant être prédéfinie avec une tolérance de l'épaisseur de paroi se trouvant dans la plage de ± 0,5 mm, en particulier de ± 0,1 mm, plus particulièrement de ± 0,05 mm, pour une épaisseur de paroi sélectionnée dans la plage de 1 à 4 mm, en particulier pour une longueur de matériau de ladite jante (12) de bicyclette découpée à partir de ladite jante dans la plage de 1 à 5 mm et à une largeur sélectionnée dans la plage de 0,5 à 2,5 cm, en particulier
dans laquelle ladite jante (12) de bicyclette a une tolérance de l'épaisseur de paroi se trouvant dans la plage de ± 0,3 mm, en particulier de ± 0,2 mm, pour une épaisseur de paroi sélectionnée dans la plage de 1 à 4 mm, et/ou
dans laquelle ladite jante (12) de bicyclette a une teneur en vide inférieure à 2 %, en particulier inférieure à 1,5 %, et/ou
dans lequel ladite jante (12) de bicyclette a une tolérance du profil de surfaces de ± 0,1 mm.

18. Jante (12) de bicyclette selon la revendication 17, dans laquelle ladite jante (12) de bicyclette a une tolérance du profil de surface de ± 0,5 mm, en particulier de ± 0,03 mm, plus particulièrement de ± 0,01 mm, et/ou
dans laquelle ladite jante de bicyclette comprend des nervures de renforcement (34), des talons de renforcement, des ondulations de rigidité et/ou des plates-formes de renforcement (36) formés au niveau d'une partie au moins d'une surface (34) intérieure de ladite jante (12) de bicyclette, et/ou
dans laquelle ladite jante (12) de bicyclette comprend des inserts (38) présents à des positions de ladite jante (12) de bicyclette correspondant à des positions de rayons (16) et/ou d'une valve associée à une roue (10) formée par ladite jante (12), et/ou
dans laquelle ladite jante (12) de bicyclette comprend des ouvertures (40, 72) intrinsèquement présentes dans au moins une paroi (18, 26) de la jante (12) de bicyclette.
